(19) 

Europäisches
Patentamt
European
Patent Office
Office européen
des brevets

(11) **EP 4 694 449 A1**

(12) **EUROPEAN PATENT APPLICATION**
published in accordance with Art. 153(4) EPC

(43) Date of publication:
**11.02.2026 Bulletin 2026/07**

(21) Application number: **23929529.8**

(22) Date of filing: **31.03.2023**

(51) International Patent Classification (IPC):
***H04W 72/0446*** *(2023.01)*

(52) Cooperative Patent Classification (CPC):
**H04W 72/0446**

(86) International application number:
**PCT/CN2023/085790**

(87) International publication number:
**WO 2024/197946 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **GUO, Shengxiang
Beijing 100085 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **RESOURCE DETERMINATION METHOD AND APPARATUS, COMMUNICATION DEVICE,
COMMUNICATION SYSTEM, AND STORAGE MEDIUM**

(57)   The present disclosure provides a resource determination method and apparatus, a device, and a storage medium. The method comprises: determining a sending resource corresponding to first information, wherein the first information is used for indicating a use state of a terminal for a transmission occasion (TO). The method of the present disclosure ensures the uplink sending efficiency.

determining a sending resource corresponding to first information — 31001

FIG. 3j

**Description**

**TECHNICAL FIELD**

The present disclosure relates to, but is not limited to, the field of communication technology, and specifically to a resource determination method and apparatus, a communication device, a communication system and a storage medium.

**BACKGROUND**

In a communication system, a network device usually configures a configured grant (CG) period for a terminal, and the CG period may include multiple transmission occasions (TOs).

**SUMMARY**

The present disclosure provides a resource determination method and apparatus, a communication device, a communication system and a storage medium.

According to a first aspect of embodiments of the present disclosure, a resource determination method is provided, including:

determining a sending resource corresponding to first information, in which the first information indicates a usage state of the terminal for a transmission occasion (TO).

According to a second aspect of embodiments of the present disclosure, a resource determination method is provided, including:

configuring a sending resource corresponding to first information for a terminal, in which the first information indicates a usage state of the terminal for a transmission occasion (TO).

According to a third aspect of embodiments of the present disclosure, a resource determination method is provided, including:

configuring, by a network device, a sending resource corresponding to first information for a terminal, wherein the first information indicates a usage state of the terminal for a transmission occasion (TO); and determining, by the terminal, the sending resource corresponding to the first information based on a configuration of the network device.

According to a fourth aspect of embodiments of the present disclosure, a first resource determination apparatus is provided, including:

a determining module, configured to determine a sending resource corresponding to first information, wherein the first information indicates a usage state of the terminal for a transmission occasion (TO).

According to a fifth aspect of the embodiments of the present disclosure, a second resource determination apparatus is provided, including:

a sending module, configured to configure a sending resource corresponding to first information for a terminal, wherein the first information indicates a usage state of the terminal for a transmission occasion (TO).

According to a sixth aspect of the embodiments of the present disclosure, a communication device is provided, including:

one or more processors;
in which the processor is configured to call instructions to cause the communication device to perform the resource determination method of any aspect of the first aspect or the second aspect.

According to a seventh aspect of the embodiments of the present disclosure, a communication system is provided, including: a terminal, and a network device; wherein the terminal is configured to perform the resource determination method of the first aspect, and the network device is configured to perform the resource determination method of the second aspect.

According to an eighth aspect of the embodiments of the present disclosure, a storage medium for storing instructions is provided. When the instructions are executed on a communication device, the communication device is caused to perform the resource determination method of any aspect of the first aspect or the second aspect.

**BRIEF DESCRIPTION OF THE DRAWINGS**

The above described aspects and/or additional aspects and advantages of the present disclosure will become apparent and easily understood from the following description of the embodiments in conjunction with the accompanying drawings, in which:

FIG. 1 is a schematic diagram of a communication system according to an embodiment of the present disclosure;
FIGS. 2a-2d, FIG. 2e1, FIG. 2f1, FIG. 2g and FIG. 2h each shows a flowchart of a resource determination method according to an embodiment of the present disclosure;
FIG. 2e2 and FIG. 2e3 each shows a schematic diagram of a process of determining a sending resource corresponding to first information based on fourth information according to an embodiment of the present disclosure;
FIG. 2f2 and FIG. 2f3 each shows a schematic diagram of a process of determining a sending resource corresponding to first information based on fifth information according to an embodiment of the present disclosure;
FIGS. 3a-3j each shows a flowchart of a resource determination method according to an embodiment of the present disclosure;
FIGS. 4a-4i each shows a flowchart of a resource determination method according to an embodiment of the present disclosure;

FIG. 5 shows a flowchart of a resource determination method according to an embodiment of the present disclosure;

FIG. 6a shows a block diagram of a first resource determination apparatus according to an embodiment of the present disclosure;

FIG. 6b shows a block diagram of a first resource determination apparatus according to an embodiment of the present disclosure;

FIG. 7a shows a block diagram of a communication device according to an embodiment of the present disclosure; and

FIG. 7b shows a block diagram of a chip according to an embodiment of the present disclosure.

## DETAILED DESCRIPTION

The method disclosed in the present disclosure aims to solve the technical problem of "how a terminal determines on which resources information indicating a usage state of a transmission occasion (TO) is sent".

Embodiments of the present disclosure provide a resource determination method and apparatus, a communication device, a communication system and a storage medium.

According to a first aspect of embodiments of the present disclosure, a resource determination method is provided, including:

determining a sending resource corresponding to first information, in which the first information indicates a usage state of the terminal for a TO (the usage state of the TO by the terminal).

In the above embodiment, the terminal may determine the sending resource for sending the first information, so that the terminal can successfully send the first information to a network device based on the sending resource, thereby achieving a successful indication of the usage state for the TO and ensuring that the network device can know the terminal's usage state with regard to the TO. As a result, the network device can schedule the TO that is not used by the terminal to be reused for uplink transmissions of other terminals, thereby preventing the resource from being idle and ensuring uplink transmission efficiency.

In combination with some embodiments of the first aspect, in some embodiments, determining the sending resource corresponding to the first information includes at least one of:

determining the sending resource corresponding to the first information based on a configuration of a network device;

determining the sending resource corresponding to the first information based on a predefined protocol; or

autonomously determining by default, by the terminal, the sending resource corresponding to the first information.

In the above embodiment, a specific method of how a terminal determines the sending resource corresponding to the first information is proposed, which may ensure that the terminal can successfully determine the sending resource for sending the first information, ensure that the first information can be successfully sent, and achieve successful indication of the usage state for the TO. As a result, the network device can successfully know the usage state of the terminal for the TO, and can schedule the TO not used by the terminal to be reused for uplink transmissions of other terminals, thus avoiding idle resources and ensuring uplink transmission efficiency.

In combination with some embodiments of the first aspect, in some embodiments, the first information indicates the usage state of the terminal for one or more TOs in a first time window, and the first time window is a time window where TOs whose usage states can be indicated by the first information are located.

In combination with some embodiments of the first aspect, in some embodiments, the first information indicates the usage state of the terminal for one or more TOs in a first time window, and the first time window is a time window where all TOs whose usage states can be indicated by the first information are located.

In the above embodiment, the first indication information is defined to indicate the usage state of the TO in the first time window, so an indication scope of the first indication information is clarified, and effective management of the first indication information is achieved.

In combination with some embodiments of the first aspect, in some embodiments, determining the sending resource corresponding to the first information based on the configuration of the network device includes:

receiving one or more first indexes sent by the network device, in which the first index is an index corresponding to a TO in a first time window; and determining one or more TOs corresponding respectively to the one or more first indexes as the sending resource corresponding to the first information.

In the above embodiment, the network device configures the sending resource corresponding to the first information for the terminal by sending the one or more first indexes corresponding to one or more TOs to the terminal, then a specific method of how the network device configures the sending resource corresponding to the first information for the terminal is proposed, which may ensure that the terminal can successfully determine the sending resource for sending the first information, ensure that the first information can be successfully sent, and achieve successful indication of the usage state for the TO. Therefore, the network device can successfully know the usage state of the terminal for the TO, and can schedule the TO not used by the terminal to be reused for uplink transmissions of other terminals, thus avoiding idle resources and ensuring uplink transmission efficiency.

In combination with some embodiments of the first aspect, in some embodiments, determining the sending resource corresponding to the first information based on the configuration of the network device includes:

receiving one or more second indexes sent by the network device, in which the second index is an index corresponding to a configured grant (CG) period in a first time window; and
determining TOs in one or more CG periods corresponding respectively to the one or more second indexes as the sending resource corresponding to the first information.

In the above embodiment, the network device configures the sending resource corresponding to the first information for the terminal by sending the one or more second indexes corresponding to the CG periods where one or more TOs are located to the terminal, so a specific method of how the network device configures the sending resource corresponding to the first information for the terminal is proposed, which may ensure that the terminal can successfully determine the sending resource for sending the first information, ensure that the first information can be successfully sent, and achieve successful indication of the usage state for the TO. Therefore, the network device can successfully know the usage state of the terminal for the TO, and can schedule the TO not used by the terminal to be reused for uplink transmissions of other terminals, thus avoiding idle resources and ensuring uplink transmission efficiency.

In combination with some embodiments of the first aspect, in some embodiments, determining the sending resource corresponding to the first information based on the configuration of the network device includes:

receiving second information sent by the network device, in which the second information includes a bitmap, each bit in the bitmap corresponds to one TO in a first time window, and a bit value carried by a bit in the bitmap indicates whether to use a TO corresponding to the bit to send the first information; and
determining the sending resource corresponding to the first information based on the second information.

In combination with some embodiments of the first aspect, in some embodiments, determining the sending resource corresponding to the first information based on the configuration of the network device includes:

receiving second information sent by the network device, in which the second information includes a bitmap, the number of bits in the bitmap is less than or equal to a total number of TOs in a first time window, each bit in the bitmap corresponds to one TO in a first time window, and a bit value carried by a bit in the bitmap indicates whether to use a TO corresponding to the bit to send the first information; and
determining the sending resource corresponding to the first information based on the second information.

In the above embodiment, the network device configures the sending resource corresponding to the first information for the terminal by sending the bitmap to the terminal, then a specific method of how the network device configures the sending resource corresponding to the first information for the terminal is proposed, which may ensure that the terminal can successfully determine the sending resource for sending the first information, ensure that the first information can be successfully sent, and achieve successful indication of the usage state for the TO. As a result, the network device can successfully know the usage state of the terminal for the TO, and can schedule the TO not used by the terminal to be reused for uplink transmissions of other terminals, thus avoiding idle resources and ensuring uplink transmission efficiency.

In combination with some embodiments of the first aspect, in some embodiments, determining the sending resource corresponding to the first information based on the configuration of the network device includes:

receiving third information sent by the network device, in which the third information is used to configure a total number of TOs for sending the first information; and
determining the TOs for sending the first information from a first time window based on the third information.

In the above embodiment, the network device configures the sending resource corresponding to the first information for the terminal by configuring the total number of TOs for sending the first information for the terminal, then a specific method of how the network device configures the sending resource corresponding to the first information for the terminal is proposed, which may ensure that the terminal can successfully determine the sending resource for sending the first information, ensure that the first information can be successfully sent, and achieve successful indication of the usage state for the TO. As a result, the network device can successfully know the usage state of the terminal for the TO, and can schedule the TO not used by the terminal to be reused for uplink transmissions of other terminals, thus avoiding idle resources and ensuring uplink transmission efficiency.

In combination with some embodiments of the first aspect, in some embodiments, determining the sending resource corresponding to the first information based on the configuration of the network device includes:

receiving fourth information sent by the network device, in which the fourth information includes a first offset and a total number of TOs for sending the first information; determining the first one of the TOs for sending the first information in a first time window based on the first offset and a first TO in the first time window; and determining the TOs for sending the first information from the first time window based on the first one of the TOs for sending the first information and the total number.

In combination with some embodiments of the first aspect, in some embodiments, determining the sending resource corresponding to the first information based on the configuration of the network device includes:

receiving fourth information sent by the network device, in which the fourth information includes a first offset and a total number of TOs for sending the first information; determining the first one of the TOs for sending the first information in a first time window based on the first offset and a first TO in the first time window, in which the first TO is any TO other than the last one of the TOs in the first time window; and determining the TOs for sending the first information from the first time window based on the first one of the TOs for sending the first information and the total number.

In the above embodiment, the network device configures the sending resource corresponding to the first information for the terminal by configuring the first offset and the total number of TOs for sending the first information for the terminal, then a specific method of how the network device configures the sending resource corresponding to the first information for the terminal is proposed, which may ensure that the terminal can successfully determine the sending resource for sending the first information, ensure that the first information can be successfully sent, and achieve successful indication of the usage state for the TO. As a result, the network device can successfully know the usage state of the terminal for the TO, and can schedule the TO not used by the terminal to be reused for uplink transmissions of other terminals, thus avoiding idle resources and ensuring uplink transmission efficiency.

In combination with some embodiments of the first aspect, in some embodiments, determining the sending resource corresponding to the first information based on the configuration of the network device includes:

cludes:

receiving fifth information sent by the network device, in which the fifth information includes a third index and a total number of TOs for sending the first information, the third index is an index corresponding to the first one of the TOs for sending the first information in a first time window; and determining the TOs for sending the first information from the first time window based on the fifth information.

In the above embodiment, the network device configures the sending resource corresponding to the first information for the terminal by configuring the third index and the total number of TOs for sending the first information for the terminal, then a specific method of how the network device configures the sending resource corresponding to the first information for the terminal is proposed, which may ensure that the terminal can successfully determine the sending resource for sending the first information, ensure that the first information can be successfully sent, and achieve successful indication of the usage state for the TO. As a result, the network device can successfully know the usage state of the terminal for the TO, and can schedule the TO not used by the terminal to be reused for uplink transmissions of other terminals, thus avoiding idle resources and ensuring uplink transmission efficiency.

In combination with some embodiments of the first aspect, in some embodiments, determining the sending resource corresponding to the first information based on the predefined protocol includes at least one of:

determining the first one of TOs in a first time window as the sending resource corresponding to the first information;

determining the first and $\left\lfloor \frac{n}{2} \right\rfloor$-th ones of TOs in a first time window as the sending resource corresponding to the first information, where n is a total number of the TOs in the first time window, and $\lfloor \cdot \rfloor$ is a round-down function;

determining the first and $\left\lceil \frac{n}{2} \right\rceil$-th ones of TOs in a first time window as the sending resource corresponding to the first information, where n is a total number of the TOs in the first time window, and $\lceil \cdot \rceil$ is a round-up function;

determining all TOs in a first time window as the sending resource corresponding to the first information;

determining first $\left\lfloor \frac{n}{2} \right\rfloor$ ones of TOs in a first time window as the sending resource corresponding to the first information, where n is a total number of the TOs in the first time window, and $\lfloor \cdot \rfloor$ is a round-down function;

determining first $\frac{n}{2}$ ones of TOs in a first time window as the sending resource corresponding to the first information, where n is a total number of the TOs in the first time window; or

determining first $\left\lceil \frac{n}{2} \right\rceil$ ones of TOs in a first time window as the sending resource corresponding to the first information, where n is a total number of the TOs in the first time window, and $\lceil \cdot \rceil$ is a round-up function.

In the above embodiment, a specific method of how the terminal determines the sending resource corresponding to the first information based on the predefined protocol is proposed, which may ensure that the terminal can successfully determine the sending resource for sending the first information, ensure that the first information can be successfully sent, and achieve successful indication of the usage state for the TO. As a result, the network device can successfully know the usage state of the terminal for the TO, and can schedule the TO not used by the terminal to be reused for uplink transmissions of other terminals, thus avoiding idle resources and ensuring uplink transmission efficiency.

In combination with some embodiments of the first aspect, in some embodiments, autonomously determining by default, by the terminal, the sending resource corresponding to the first information includes at least one of:

determining the first one of TOs in a first time window as the sending resource corresponding to the first information;

determining the first and $\left\lfloor \frac{n}{2} \right\rfloor$ -th ones of TOs in a first time window as the sending resource corresponding to the first information, where n is a total number of the TOs in the first time window, and $\lfloor \cdot \rfloor$ is a round-down function;

determining the first and $\left\lceil \frac{n}{2} \right\rceil$ -th ones of TOs in a first time window as the sending resource corresponding to the first information, where n is a total number of the TOs in the first time window, and $\lceil \cdot \rceil$ is a round-up function;

determining all TOs in a first time window as the sending resource corresponding to the first information;

determining first $\left\lfloor \frac{n}{2} \right\rfloor$ ones of TOs in a first time window as the sending resource corresponding to the first information, where n is a total number of the TOs in the first time window, and $\lfloor \cdot \rfloor$ is a round-down function;

determining first $\frac{n}{2}$ ones of TOs in a first time window as the sending resource corresponding to the first information, where n is a total number of the TOs in the first time window; or

determining first $\left\lceil \frac{n}{2} \right\rceil$ ones of TOs in a first time window as the sending resource corresponding to the first information, where n is a total number of the TOs in the first time window, and $\lceil \cdot \rceil$ is a round-up function.

In the above embodiment, a specific method of how the terminal autonomously determines the sending resource corresponding to the first information is proposed, which may ensure that the terminal can successfully determine the sending resource for sending the first information, ensure that the first information can be successfully sent, and achieve successful indication of the usage state for the TO. As a result, the network device can successfully know the usage state of the terminal for the TO, and can schedule the TO not used by the terminal to be reused for uplink transmissions of other terminals, thus avoiding idle resources and ensuring uplink transmission efficiency.

In combination with some embodiments of the first aspect, in some embodiments, the method further includes:

reporting the sending resource corresponding to the first information to the network device, in which the terminal autonomously determines the sending resource corresponding to the first information.

In the above embodiment, after the terminal autonomously determines the sending resource corresponding to the first information, the terminal may report the sending resource corresponding to the first information to the network device, so that the network device can know which sending resource corresponds to the first information, and thus the network device can successfully receive the first information at the sending resource corresponding to the first information. Then, the network device can successfully know the terminal's usage state for the TO based on the first information, and can schedule the TO not used by the terminal to be reused for uplink transmissions of other terminals, thereby avoiding idle resources and ensuring uplink transmission efficiency.

In combination with some embodiments of the first aspect, in some embodiments, the first time window includes:

one CG period; or

a plurality of CG periods that overlap in a time domain; or

a plurality of CG periods that do not overlap in a time domain; or

one or more TOs; or

one or more radio frames; or

one or more radio half-frames; or

one or more time domain symbols; or

one or more time slots.

According to a second aspect of embodiments of the present disclosure, a resource determination method is provided, including:

configuring a sending resource corresponding to first information for a terminal, in which the first information indicates a usage state of the terminal for a transmission occasion (TO).

In the above embodiment, a specific method of how the network device configures the sending resource corresponding to the first information for the terminal is proposed, which may that the terminal can successfully determine the sending resource for sending the first information, ensure that the first information can be successfully sent, and achieve successful indication of the usage state for the TO. As a result, the network device can successfully know the usage state of the terminal for the TO, and can schedule the TO not used by the terminal to be reused for uplink transmissions of other terminals, thus avoiding idle resources and ensuring uplink transmission efficiency.

In combination with some embodiments of the second aspect, in some embodiments, the first information indicates the usage state of the terminal for one or more TOs in a first time window, and the first time window is a time window where TOs whose usage states can be indicated by the first information are located.

In combination with some embodiments of the second aspect, in some embodiments, the first information indicates the usage state of the terminal for one or more TOs in a first time window, and the first time window is a time window where all TOs whose usage states can be indicated by the first information are located.

Configuring the sending resource corresponding to the first information for the terminal includes:

sending one or more first indexes to the terminal, in which the one or more first indexes correspond respectively to one or more TOs for sending the first information in a first time window.

In combination with some embodiments of the second aspect, in some embodiments, configuring the sending resource corresponding to the first information for the terminal includes:

sending one or more second indexes to the terminal, in which the one or more second indexes correspond respectively to one or more configured grant (CG) periods where TOs for sending the first information in a first time window are located.

In combination with some embodiments of the second aspect, in some embodiments, configuring the sending resource corresponding to the first information for the terminal includes:

sending second information to the terminal, in which the second information includes a bitmap, each bit in the bitmap corresponds to one TO in a first time window, and a bit value carried by a bit in the bitmap indicates whether to use a TO corresponding to the bit to send the first information.

In combination with some embodiments of the second aspect, in some embodiments, configuring the sending resource corresponding to the first information for the terminal includes:

sending second information to the terminal, in which the second information includes a bitmap, the number of bits in the bitmap is less than or equal to a total number of TOs in a first time window, each bit in the bitmap corresponds to one TO in a first time window, and a bit value carried by a bit in the bitmap indicates whether to use a TO corresponding to the bit to send the first information.

In combination with some embodiments of the second aspect, in some embodiments, configuring the sending resource corresponding to the first information for the terminal includes:

sending third information to the terminal, in which the third information is used to configure a total number of TOs for sending the first information.

In combination with some embodiments of the second aspect, in some embodiments, configuring the sending resource corresponding to the first information for the terminal includes:

sending fourth information to the terminal, in which the fourth information includes a first offset and a total number of TOs for sending the first information.

In combination with some embodiments of the second aspect, in some embodiments, configuring the sending resource corresponding to the first information for the terminal includes:

sending fifth information to the terminal, in which the fifth information includes a third index and a total number of TOs for sending the first information, the third index is an index corresponding to the first one of the TOs for sending the first information in a first time window.

In combination with some embodiments of the second aspect, in some embodiments, the first time window includes:

one CG period; or

a plurality of CG periods that overlap in a time domain; or

a plurality of CG periods that do not overlap in a time domain; or

one or more TOs; or

one or more radio frames; or

one or more radio half-frames; or

one or more time domain symbols; or

one or more time slots.

In combination with some embodiments of the second aspect, in some embodiments, the method further includes:
determining the sending resource corresponding to the first information based on a predefined protocol.

In combination with some embodiments of the second aspect, in some embodiments, determining the sending resource corresponding to the first information based on the predefined protocol includes at least one of:

determining the first one of TOs in a first time window as the sending resource corresponding to the first information;

determining the first and $\left\lfloor \frac{n}{2} \right\rfloor$-th ones of TOs in a first time window as the sending resource corresponding to the first information, where n is a total number of the TOs in the first time window, and $\lfloor \cdot \rfloor$ is a round-down function;

determining the first and $\left\lceil \frac{n}{2} \right\rceil$-th ones of TOs in a first time window as the sending resource corresponding to the first information, where n is a total number of the TOs in the first time window, and $\lceil \cdot \rceil$ is a round-up function;

determining all TOs in a first time window as the sending resource corresponding to the first information;

determining first $\left\lfloor \frac{n}{2} \right\rfloor$ ones of TOs in a first time window as the sending resource corresponding to the first information, where n is a total number of the TOs in the first time window, and $\lfloor \cdot \rfloor$ is a round-down function;

determining first $\frac{n}{2}$ ones of TOs in a first time window as the sending resource corresponding to the first information, where n is a total number of the TOs in the first time window; or

determining first $\left\lceil \frac{n}{2} \right\rceil$ ones of TOs in a first time window as the sending resource corresponding to the first information, where n is a total number of the TOs in the first time window, and $\lceil \cdot \rceil$ is a round-up function.

In combination with some embodiments of the second aspect, in some embodiments, the method further includes:

receiving a transmission resource corresponding to the first information reported by the terminal;
in which the transmission resource corresponding to the first information reported by the terminal includes the first one of TOs in a first time window; or

the transmission resource corresponding to the first information reported by the terminal includes the first and $\left\lfloor \frac{n}{2} \right\rfloor$-th ones of TOs in a first time window that are determined as the sending resource corresponding to the first information, where n is a total number of the TOs in the first time window, and $\lfloor \cdot \rfloor$ is a round-down function; or

the transmission resource corresponding to the first information reported by the terminal includes the first and $\left\lceil \frac{n}{2} \right\rceil$-th ones of TOs in a first time window that are determined as the sending resource corresponding to the first information, where n is a total number of the TOs in the first time window, and $\lceil \cdot \rceil$ is a round-up function; or

the transmission resource corresponding to the first information reported by the terminal includes all TOs in a first time window; or

the transmission resource corresponding to the first information reported by the terminal includes first $\left\lfloor \frac{n}{2} \right\rfloor$ ones of TOs in a first time window that are determined as the sending resource corresponding to the first information, where n is a total number of the TOs in the first time window, and $\lfloor \cdot \rfloor$ is a round-down function; or

the transmission resource corresponding to the first information reported by the terminal includes first $\frac{n}{2}$ ones of TOs in a first time window that are determined as the sending resource corresponding to the first information, where n is a total number of the TOs in the first time window; or

the transmission resource corresponding to the first information reported by the terminal includes first $\left\lceil \frac{n}{2} \right\rceil$ ones of TOs in a first time window that are determined as the sending resource corresponding to the first information, where n is a total number of the TOs in the first time window, and $\lceil \cdot \rceil$ is a round-up function.

According to a third aspect of embodiments of the present disclosure, a resource determination method is provided, including:

configuring, by a network device, a sending resource corresponding to first information for a terminal, in which the first information indicates a usage state of the terminal for a transmission occasion (TO); and
determining, by the terminal, the sending resource corresponding to the first information based on a configuration of the network device.

According to a fourth aspect of embodiments of the present disclosure, a first resource determination apparatus is provided, including:
a determining module, configured to determine a sending resource corresponding to first information, in which the first information indicates a usage state of the terminal for a transmission occasion (TO).

According to a fifth aspect of the embodiments of the present disclosure, a second resource determination apparatus is provided, including:
a sending module, configured to configure a sending resource corresponding to first information for a terminal, in which the first information indicates a usage state of the terminal for a transmission occasion (TO).

According to a sixth aspect of the embodiments of the present disclosure, a communication device is provided, including: one or more processors and one or more memories for storing instructions; in which the processor is configured to call the instructions to cause the communication device to perform the resource determination method of the first aspect, the second aspect, or alternative implementations of the first aspect or the second aspect.

According to a seventh aspect of the embodiments of the present disclosure, a communication system is provided, including: a terminal, and a network device. The terminal is configured to perform the resource determination method of the first aspect or alternative implementations of the first aspect, and the network device is configured to perform the resource determination method of the second aspect or alternative implementations of the second aspect.

According to an eighth aspect of the embodiments of the present disclosure, a storage medium for storing instructions is provided. When the instructions are executed on a communication device, the communication device is caused to perform the resource determination method of the first aspect, alternative implementations of the first aspect, the second aspect or alternative implementations of the second aspect.

According to a ninth aspect of the embodiments of the present disclosure, a program product is provided. When the program product is executed on a communication device, the communication device is caused to perform the resource determination method of the first aspect, alternative implementations of the first aspect, the second aspect or alternative implementations of the second aspect.

According to a tenth aspect of the embodiments of the present disclosure, a computer program is provided. When the computer program is running on a computer, the computer is caused to perform the resource determination method of the first aspect, alternative implementations of the first aspect, the second aspect or alternative implementations of the second aspect.

**It** can be understood that the first resource determination apparatus, the second resource determination apparatus, the communication device, the communication system, the storage medium, the program product, and the computer program are all used to execute the method proposed in the embodiments of the present disclosure. Therefore, for the beneficial effects that can be achieved, reference may be made to the beneficial effects in the corresponding method, which will not be repeated here.

The embodiments of the present disclosure propose the title of the present disclosure. In some embodiments, the terms such as resource determination method, information processing method, communication method, etc. can be replaced with each other, the terms such as information transmission apparatus, information processing apparatus, communication apparatus, etc. can be replaced with each other, and the terms such as information processing system, communication system, etc. can be replaced with each other.

The embodiments of the present disclosure are not exhaustive, but are only illustrative, and are not intended to be a specific limitation on the protection scope of the present disclosure. In the absence of contradiction, each step in a certain embodiment can be implemented as an independent embodiment, and respective steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, respective embodiments can be arbitrarily combined, for example, some or all steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referred to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the present disclosure, "plurality" refers to two or more.

In some embodiments, the terms "at least one of", "one or more", "a plurality of", "multiple" etc. may be used interchangeably.

In the embodiments of the present disclosure, descriptions such as "at least one of A, B, C...", "A and/or B and/or C...", etc. include the case where any one of A, B, C... exists alone, and also include any combination of any multiple ones of A, B, C..., and each case may exist alone. For example, "at least one of A, B, or C" includes the case where A exists alone, the case where B exists alone, the case where C exists alone, the combination of A and B, the combination of A and C, the combination of B and C, and the combination of A, B, and C. For example, A and/or B includes the case where A exists alone, the case where B exists alone, and the combination of A and B.

In some embodiments, the descriptions such as "in one case, A; in another case, B", "in response to one case, A; in response to another case, B", etc. may include the following technical solutions according to situations: A is executed independently of B, that is, in some embodiments, A; B is executed independently of A, that is, in some embodiments, B; A and B are selectively executed, that is, in some embodiments, one is selected from A and B to be executed; both A and B are executed, that is, in some embodiments, A and B. When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and can be one or more. Taking the "first apparatus" as an example, the number of "apparatuses" can be one or more. In addition, the objects modified by different prefixes may be the same or different. For example, if the descriptive object is " apparatus", then the "first apparatus" and the "second apparatus" may be the same device or different apparatuses, and their types may be the same or different. For another example, if the descriptive object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, the terms such as "in response to...", "in response to determining...", "in the case of...", "at the time of...", "when...", "if...", "if...", etc. can be used interchangeably.

In some embodiments, the terms such as "greater than", "greater than or equal to", "not less than", "more than", "more than or equal to", "not less than", "higher than", "higher than or equal to", "not lower than", and "above" can be replaced with each other, and the terms such as "less than", "less than or equal to", "not greater than", "less than", "less than or equal to", "no more than", "lower than", "lower than or equal to", "not higher than", and "below" can be replaced with each other.

In some embodiments, the apparatus, etc. can be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" can be used interchangeably.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like can be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like can be used interchangeably.

In some embodiments, the access network device, the core network device, or the network device can be replaced by the terminal. For example, various embodiments of the present disclosure can also be applied to a structure in which the communication between the access network device, the core network device, or the network device and the terminal is replaced by the communication between multiple terminals (for example, it can also be referred to as device-to-device (D2D), vehicle-to-everything (V2X), etc.). In this case, the terminal can be set to have a structure that has all or part of functions of the access network device. In addition, the language such as "uplink" and "downlink" can also be replaced by the language corresponding to the communication between the terminals (for example, "side"). For example, the uplink channel, the downlink channel, etc. can be replaced by the side channel, and the uplink, the downlink, etc. can be replaced by the side link.

In some embodiments, the terminal may be replaced by the access network device, the core network device, or the network device. In this case, the access network device, the core network device, or the network device may also be configured to have a structure that has all or part of functions of the terminal.

In some embodiments, the names of information, etc. are not limited to the names recorded in the embodiments, and terms such as "information", "message", "signal", "signaling", "report", "configuration", "indication", "instruction", "command", "channel", "parameter", "domain", "field", "symbol", "symbol", "code element", "codebook", "codeword", "codepoint", "bit", "data", "program", and "chip" can be used interchangeably.

In some embodiments, the terms such as "uplink", "uplink", "physical uplink" can be interchangeable, and terms such as "downlink", "downlink", "physical downlink" can be interchangeable, and the terms such as "side", "sidelink", "side communication", "sidelink communication", "direct connection", "direct link", "direct communication", "direct link communication" can be interchangeable.

In some embodiments, the terms "downlink control information (DCI)", "downlink (DL) assignment", "DL DCI", "uplink (UL) grant", "UL DCI" and the like may be used interchangeably.

In some embodiments, the terms such as "physical downlink shared channel (PDSCH)", "DL data" and the like can be interchangeable, and the terms such as "physical uplink shared channel (PUSCH)", "UL data" and the like can be interchangeable.

In some embodiments, the terms "radio", "wireless", "radio access network (RAN)", "access network (AN)", "RAN-based" and the like may be used interchangeably.

In some embodiments, the terms "search space", "search space set", "search space configuration", "search space set configuration", "control resource set (CORESET)", "CORESET configuration" and the like may be interchangeable.

In some embodiments, terms such as "synchronization signal (SS)", "synchronization signal block (SSB)", "reference signal (RS)", "pilot", "pilot signal" and the like can be used interchangeably.

In some embodiments, the terms such as "moment", "time point", "time", "time position" and the like can be interchangeable, and the terms such as "duration", "period", "time window", "window", "time" and the like can be interchangeable.

In some embodiments, the terms "component carrier (CC)", "cell", "frequency carrier", "carrier frequency" and the like may be used interchangeably.

In some embodiments, terms such as "resource block (RB)", "physical resource block (PRB)", "sub-carrier group (SCG)", "resource element group (REG)", "PRB pair", "RB pair", "resource element (RE)" and the like can be used interchangeably.

In some embodiments, the terms such as "wireless access scheme", "waveform", etc. may be used interchangeably.

In some embodiments, the terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel" and the like can be used interchangeably.

In some embodiments, the terms such as "frame", "radio frame", "subframe", "slot", "sub-slot", "mini-slot", "symbol", "symbol", "transmission time interval (TTI)" and so on can be used interchangeably.

In some embodiments, "obtain", "acquire", "get", "receive", "transmit", "bidirectional transmission", "send and/or receive" can be interchangeable, and can be interpreted as receiving from other entities, obtaining from a protocol, obtaining by self-processing, autonomous implementation, etc.

In some embodiments, the terms such as "send", "transmit", "report", "issue", "transmit", "bi-directionally transmit", "send and/or receive" and the like can be used interchangeably.

In some embodiments, "predetermined" or "preset" may be interpreted as being prespecified in a protocol, etc., or may be interpreted as an apparatus performing a pre-set action, etc.

In some embodiments, "determining" can be interpreted as "judging", "deciding", "judging", "calculating", "computing", "processing", "deriving", "investigating", "searching", "looking up", "searching", "inquiring", "ascertaining", "receiving", "transmitting", "inputting", "outputting, "accessing", "resolving", "selecting", "choosing", "establishing", "comparing", "assuming", "expecting", "considering", "broadcasting", "notifying", "communicating", "forwarding", "configuring", "reconfiguring", "allocating", "mapping", "assigning", etc., but is not limited to the above.

In some embodiments, the determination or judgment may be performed by a value represented by 1 bit (0 or 1), or by a true/false value (Boolean value) represented by true or false, or by comparison of numerical values (for example, comparison with a predetermined value), but is not limited thereto.

In some embodiments, "network" may be interpreted as apparatuses included in the network (e.g., access network device, core network device, etc.).

In some embodiments, "not expecting to receive" can be interpreted as not receiving on time domain resources and/or frequency domain resources, or as not performing subsequent processing on the data after receiving the data; "not expecting to send" can be interpreted as not sending, or as sending but not expecting the recipient to respond to the sent content.

In some embodiments, the acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, or any columns may also be implemented as an independent embodiment.

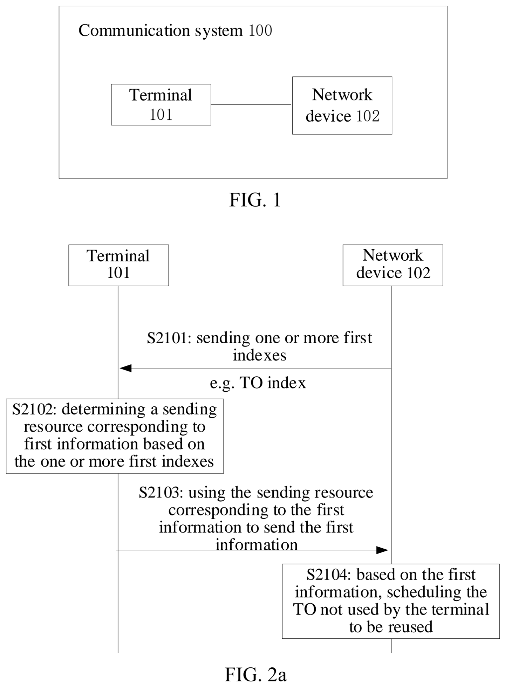

FIG. 1 is a schematic diagram of a communication system according to an embodiment of the present disclosure. As shown in FIG. 1, the communication system 100 may include a terminal 101 and a network device 102. The network device 102 may include at least one of an access network device or a core network device.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited thereto.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited thereto.

In some embodiments, the technical solution of the present disclosure may be applicable to an Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited thereto.

In some embodiments, the core network device may be a device including one or more network elements, or may be a plurality of devices or device groups, each including all or part of one or more network elements. The network element may be virtual or physical. The core network may include, for example, at least one of an Evolved Packet Core (EPC), a 5G Core Network (5GCN), or a Next Generation Core (NGC).

It can be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

The following embodiments of the present disclosure may be applied to the communication system 100 or part of the subjects shown in FIG. 1, but are not limited thereto. The subjects shown in FIG. 1 are examples, and the communication system may include all or part of the subjects in FIG. 1, or may include other subjects other than those shown in FIG. 1, and the number and form of the subjects are arbitrary, and the connection relationships between the subjects are examples, and the subjects may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems can also be combined (for example, a combination of LTE or LTE-A and 5G, etc.) for application.

Alternatively, the network device configures at least one set of CG periods for the terminal. For example, the network device may configure at least one set of CG periods for the terminal on a bandwidth part (BWP), and the CG period supports up to 14*40960 symbols, and the CG period may include one or more TOs. For example, the method for the above-mentioned network device to configure at least one set of CG periods for the terminal may be implemented as follows. The network device may configure at least one set of CG periods for the terminal through a higher-layer signaling (such as Radio Resource Control (RRC) signaling), or the network device may configure partial information of at least one set of CG periods for the terminal through a high-layer signaling (such as RRC signaling) and send a dynamic signaling (such as downlink control information (DCI) signaling) to the terminal. The dynamic signaling may include remaining information of the at least one CG period for activating the CG period. Alternatively, up to 12 sets of CG periods may be configured and activated on one BWP, and each set of CG periods is identified by an index.

Alternatively, when the network device successfully configures at least one set of CG periods for the terminal, and the CG period includes multiple TOs, the terminal may select the TO to be used by the terminal from all TOs in the CG period. Alternatively, the terminal may select at least part of the TOs in the CG period as "used TOs", and the remaining TOs (that is, TOs other than "TOs selected to be used by the terminal" in at least one CG period configured by the network device) are considered to be "unused TOs" of the terminal. Alternatively, for the "used TO" selected by the terminal, the terminal may selectively actually use the TO, for example, using the TO for uplink transmission, or may not use the TO, for example, not using the TO for uplink transmission. For the "unused TO" selected by the terminal, the terminal will not use the TO, for example, not using the TO for uplink transmission.

Alternatively, after the terminal selects the TO to be used by the terminal from all TOs in the CG period, the terminal may send a first indication to the network device to indicate the usage state of the TO in the CG period, so that the network device may determine the "unused TO" in the CG period based on the first indication. The network device may then schedule the TO not used by the terminal to be reused for uplink transmissions of other terminals, thereby improving uplink transmission efficiency.

Alternatively, the terminal usually carries the above-mentioned first indication through uplink control information (UCI), and the UCI may be sent to the network device in any one or several TOs (for example, the used TOs) in the CG period. Alternatively, the TO used to send the UCI may be predefined based on the protocol, or may be configured by the network device. However, the detailed method of "how to predefine which TOs to use to send the UCI based on the protocol, and how the network device configures which TOs to use to send the UCI" has not yet been clarified.

Accordingly, the present disclosure provides a resource determination method.

Alternatively, in some embodiments, the method of the present disclosure may be applied to a first business scenario, which may be a business scenario with low latency and high throughput requirements. For example, in some embodiments, the method of the present disclosure may be applied to an extended reality (XR) business scenario, where XR is a general term for virtual reality (VR), augmented reality (AR), and mixed reality (MR).

FIG. 2a is an interactive schematic diagram of a resource determination method according to an embodiment of the present disclosure. As shown in FIG. 2a, embodiments of the present disclosure relate to a resource determination method used in a communication system 100, and the method includes the following steps.

At step 2101, a network device sends one or more first indexes to a terminal.

In some embodiments, the terminal 101 may receive one or more first indexes. Alternatively, the first index, for example, may be TOwithUCI.

In some embodiments, the one or more first indexes may correspond to one or more TOs for sending first information.

In some embodiments, the first information may be used to indicate a usage state of the terminal for the TO. The usage state may include "used" or "unused".

In some embodiments, the first information may be used to indicate the usage state of the terminal for one or more TOs in a first time window. Alternatively, the first time window may be a time window where the TO whose usage state can be indicated by the first information is located, or the first time window may be a time window where all TOs whose usage states can be indicated by the first information are located. The first time window may be understood as a valid time window corresponding to the first information. Alternatively, the name of the first time window is not limited and may be other names. Alternatively, the first time window may be predefined by the protocol, or the first time window may be configured by the network device. Alternatively, the first time window may include one CG period; or the first time window may include multiple CG periods that overlap in a time domain; or the first time window may include multiple CG periods that do not overlap in the time domain; or the first time window may include one or more TOs; or the first time window may include one or more radio frames; or the first time window may include one or more radio half frames; or the first time window may include one or more time domain symbols; or the first time window may include one or more time slots.

In some embodiments, the name of the first information is not limited, and may be, for example, "CG-UCI", "new UCI", "dynamic indication information", etc. Alternatively, the new UCI may be a newly designed UCI compared to the existing UCI (i.e., CG-UCI).

In some embodiments, the above-mentioned time window is only an example name in the present disclosure, which may also be referred to as a time range, or a time duration, a duration, etc. It should be understood that other terms similar to "time window, time range, duration, duration" also fall within the protection scope of the present disclosure.

Alternatively, in some embodiments, the first information may be used to indicate: the usage state of one or more TOs located after a sending resource of the first information in the first time window.

In some embodiments, the one or more first indexes may correspond to one or more TOs for sending the first information in the first time window.

In some embodiments, the number of the first indexes sent by the network device may be less than or equal to a total number of TOs in the first time window. Alternatively, in other embodiments, since the first information is used to indicate the usage state of one or more TOs located after the sending resource of the first information in the first time window, the last one of the TOs in the first time window is not used to send the first information, then the number of first indexes sent by the network device may be less than or equal to the total number of TOs in the first time window minus 1, and the one or more first indexes sent by the network device to the terminal may not include the index corresponding to the last one of the TOs in the first time window.

In some embodiments, the access network device 102 sends a first signaling, and the first signaling may include the one or more first indexes. Alternatively, the terminal 101 may receive the first signaling. The first signaling may be, for example, a radio resource control (RRC) signaling, but is not limited thereto, and may also be other signaling (such as downlink control information (DCI) signaling, etc.).

For example, in some embodiments, it is assumed that 7 TOs are included in the first time window, and the first indexes corresponding to the 7 TOs are: TO0, TO1, TO2, TO3, TO4, TO5, TO6, then when the network device sends the one or more first indexes to the terminal, the one or more first indexes may be {TO0, TO1, TO2, TO3}, or {TO1}, or {TO 1, TO3}.

At step 2102, the terminal determines a sending resource corresponding to first information based on the one or more first indexes.

In some embodiments, the terminal may determine the one or more TOs indicated by the one or more first indexes as the sending resource corresponding to the first information.

For example, when the one or more first indexes sent by the network device to the terminal in the above step 2101 include {TO0, TO1, TO2, TO3}, it means that the sending resource corresponding to the first information includes: the first one, the second one, the third one, and the fourth one of TOs in the first time window. When the one or more first indexes sent by the network device to the terminal include {TO1}, it means that the sending resource corresponding to the first information includes the first one of TOs in the first time window. When the one or more first indexes sent by the network device to the terminal include {TO1, TO3}, it means that the sending resource corresponding to the first information includes the first one and the third one of TOs in the first time window.

At step 2103, the terminal uses the sending resource corresponding to the first information to send the first information to the network device.

In some embodiments, the sending resource corresponding to the first information includes: the first one, the second one, the third one, and the fourth one of the TOs in the first time window, then the terminal may send the first information through the first one, the second one, the third one, and the fourth one of the TOs in the first time window. The sending resource corresponding to the first information includes the first one of the TOs in the first time window, then the terminal may send the first information through the first one of the TOs in the first time window. The sending resource corresponding to the first information includes the first one and the third one of the TOs in the first time window, then the terminal may send the first information through the first one and the third one of the TOs in the first time window.

In some embodiments, the first information may be carried in a CG physical uplink shared channel (PUSCH) and sent to the network device.

At step 2104, based on the first information, the network device schedules the TO not used by the terminal to be reused.

In some embodiments, after the network device receives the first information sent by the terminal, the network device may determine the usage state of the terminal for the TO based on the first information, and determine the TO that is not used by the terminal. Then the network device may schedule the TO that is not used by the terminal to be reused for uplink transmissions by other terminals, thereby making full use of the sending resource, avoiding idleness of the sending resource, and improving uplink transmission efficiency.

The resource determination method involved in the embodiments of the present disclosure may include at least one of steps S2101 to S2104. For example, step S2101 may be implemented as an independent embodiment, step S2102 may be implemented as an independent embodiment, steps S2101+S2102 may be implemented as an independent embodiment, and steps S2101+S2102+S2103 may be implemented as an independent embodiment, which are not limited herein.

In some embodiments, steps S2103 and S2104 are optional, and one or more of these steps may be omitted or replaced in different embodiments.

In these implementations or embodiments, unless there is any contradiction, each step can be independent, arbitrarily combined or exchanged in order, the optional implementations or optional examples can be arbitrarily combined, and can be arbitrarily combined with any steps of other implementations or other examples.

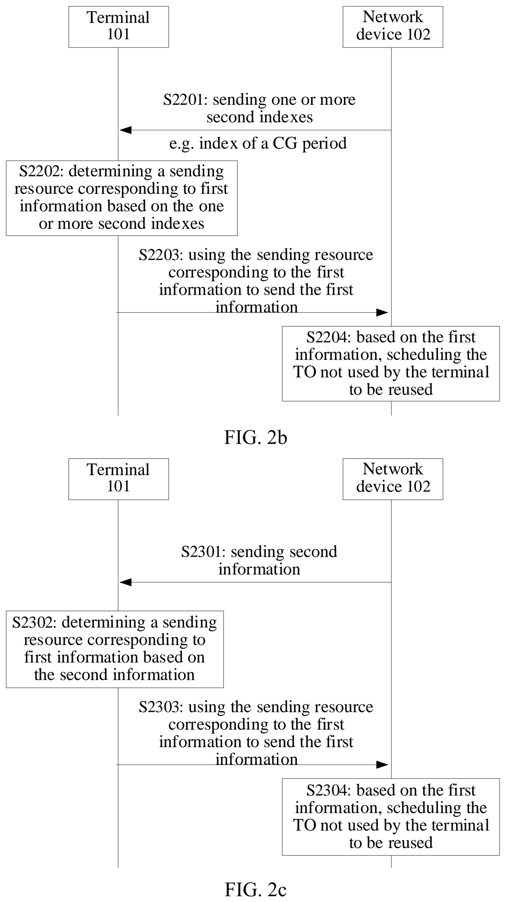

FIG. 2b is an interactive schematic diagram of a resource determination method according to an embodiment of the present disclosure. As shown in FIG. 2b, embodiments of the present disclosure relate to a resource determination method used in a communication system 100, and the method includes the following steps.

At step 2201, a network device sends one or more second indexes to a terminal.

In some embodiments, the terminal 101 may receive one or more second indexes.

In some embodiments, the one or more second indexes may correspond respectively to one or more CG periods for sending first information in a first time window. In other embodiments, the one or more second indexes may correspond to one or more CG periods where one or more TOs for sending the first information in the first time window are located. For detailed introduction to the first information and the first time window, reference may be made to the embodiment of FIG. 2a above.

In some embodiments, the access network device 102 sends a first signaling, and the first signaling may include the one or more second indexes. Alternatively, the terminal 101 may receive the first signaling. The first signaling may be, for example, a radio resource control (RRC) signaling, but is not limited thereto, and may also be other signaling (such as downlink control information (DCI) signaling, etc.).

For example, in some embodiments, it is assumed that four CG periods are included in the first time window, and the first indexes corresponding to the four TOs are: CG0, CG1, CG2, CG3, respectively, when the network device sends the one or more first indexes to the terminal, the one or more first indexes may be {CG0, CG1, CG2, CG3}, or {CG1}, or {CG1, CG3}.

At step 2202, the terminal determines a sending resource corresponding to first information based on the one or more second indexes.

In some embodiments, the terminal may determine the one or more CG periods indicated by the one or more second indexes as the sending resource corresponding to the first information. In other embodiments, the terminal may determine TOs in the one or more CG periods indicated by the one or more second indexes as the sending resource corresponding to the first information.

Alternatively, the above-mentioned "determining the one or more CG periods indicated by the one or more second indexes as the sending resource corresponding to the first information" may include, for example: determining all TOs in the one or more CG periods indicated by the one or more second indexes as the sending resource corresponding to the first information. The above-mentioned "determining the TOs in the one or more CG periods indicated by the one or more second indexes as the sending resource corresponding to the first information" may include, for example: determining at least part of the TOs in the one or more CG periods indicated by the one or more second indexes as the sending resource corresponding to the first information, such as, determining all TOs in the one or more CG periods indicated by the one or more second indexes as the sending resource corresponding to the first information, or determining any part of the TOs (such as the first half of the TOs) in the one or more CG periods indicated by the one or more second indexes as the sending resource corresponding to the first information.

For example, when the one or more second indexes sent by the network device to the terminal include {CG0, CG1, CG2, CG3}, it means that the sending resource corresponding to the first information includes: the first one, the second one, the third one, and the fourth one of CG periods in the first time window, or it means that the sending resource corresponding to the first information includes: a TO in the first one of the CG periods in the first time window, a TO in the second one of the CG periods, a TO in the third one of the CG periods, and a TO in the fourth one of the CG periods. When the one or more first indexes sent by the network device to the terminal include {CG1}, it means that the sending resource corresponding to the first information includes: the first one of the CG periods in the first time window, or it means that the sending resource corresponding to the first information includes: a TO in the first one of the CG periods in the first time window. When the one or more first indexes sent by the network device to the terminal include {CG1, CG3}, it means that the sending resource corresponding to the first information includes: the first one and the third one of the CG periods in the first time window, or it means that the sending resource corresponding to the first information includes: a TO in the first one of the CG periods in the first time window and a TO in the third one of the CG periods.

At step 2203, the terminal uses the sending resource corresponding to the first information to send the first information to the network device.

In some embodiments, the sending resource corresponding to the first information includes: the first one, the second one, the third one, and the fourth one of the CG periods in the first time window, then the terminal may send the first information through the first one, the second one, the third one, and the fourth one of the CG periods in the first time window. The sending resource corresponding to the first information includes: a TO in the first one, a TO in the second one, a TO in the third one, and a TO in the fourth one of the CG periods in the first time window, then the terminal may send the first information through at least partial TO in the first one, at least partial TO in the second one, at least partial TO in the third one, and at least partial TO in the fourth one of the CG periods in the first time window.

In some other embodiments, when the sending resource corresponding to the first information is the first one of the CG periods in the first time window, the terminal needs to send the first information through the first one of the CG periods in the first time window; when the sending resource corresponding to the first information is the TO in the first one of the CG periods in the first time window, the terminal needs to send the first information through at least part of the TO in the first one of the CG periods in the first time window.

In some other embodiments, when the sending resource corresponding to the first information is the first one and the third one of the CG periods in the first time window, the terminal needs to send the first information through the first one and the third one of the TOs in the first time window; when the sending resource corresponding to the first information is the TO in the first one and the TO in the third one of the CG periods in the first time window, the terminal needs to send the first information through at least part of the TO in the first one and at least part of the TO in the third one of the TOs in the first time window.

At step 2204, based on the first information, the network device schedules the TO not used by the terminal to be reused.

For detailed description of steps 2203-2204, reference may be made to the embodiment of FIG. 2a above.

The resource determination method involved in the embodiments of the present disclosure may include at least one of steps S2201 to S2204. For example, step S2201 may be implemented as an independent embodiment, step S2202 may be implemented as an independent embodiment, steps S2201+S2202 may be implemented as an independent embodiment, and steps S2201+S2202+S2203 may be implemented as an independent embodiment, which is not limited herein.

In some embodiments, steps S2203 and S2204 are optional, and one or more of these steps may be omitted or replaced in different embodiments.

In these implementations or embodiments, unless there is any contradiction, each step can be independent, arbitrarily combined or exchanged in order, the optional implementations or optional examples can be arbitrarily combined, and can be arbitrarily combined with any steps of other implementations or other examples.

FIG. 2c is an interactive schematic diagram of a resource determination method according to an embodiment of the present disclosure. As shown in FIG. 2c, embodiments of the present disclosure relate to a resource determination method used in a communication system 100, and the method includes the following steps.

At step 2301, a network device sends second information to a terminal.

In some embodiments, the terminal 101 may receive the second information.

In some embodiments, the second information may include a bitmap, each bit in the bitmap corresponds to one TO in a first time window, for example, the first one of bits in the bitmap may correspond to the first one of TOs in the first time window, the second one of the bits in the bitmap may correspond to the second one of the TOs in the first time window, the third one of the bits in the bitmap may correspond to the third one of the TOs in the first time window, and so on. A bit value carried by a bit in the bitmap is used to indicate whether to use the TO corresponding to the bit to send the first information, for example, when the bit value carried by the bit in the bitmap is a first value (such as 1), it indicates that the TO corresponding to the bit is used to send the first information; when the bit value carried by the bit in the bitmap is a second value (such as 0), it indicates that the TO corresponding to the bit is not used to send the first information. Alternatively, the number of the bits in the bitmap may be less than or equal to the total number of the TOs in the first time window, or the number of the bits in the bitmap may be less than or equal to the total number of the TOs in the first time window minus 1.

For detailed introduction to the first information and the first time window, reference may be to the embodiment of FIG. 2a above.

In some embodiments, the access network device 102 sends a first signaling, and the first signaling may include the second information. Alternatively, the terminal 101 may receive the first signaling. The first signaling may be, for example, a radio resource control (RRC) signaling, but is not limited thereto, and may also be other signaling (such as downlink control information (DCI) signaling, etc.).

For example, in some embodiments, it is assumed that 7 TOs are included in the first time window. The bitmap includes four bits, the first one of the bits in the bitmap corresponds to the first one of the TOs in the first time window, the second one of the bits in the bitmap corresponds to the second one of the TOs in the first time window, the third one of the bits in the bitmap corresponds to the third one of the TOs in the first time window, the fourth one of the bits in the bitmap corresponds to the fourth one of the TOs in the first time window. It is assumed that when the bit value carried by the bit is 1, it indicates that the TO corresponding to the bit is used to send the first information; when the bit value carried by the bit is 0, it indicates that the TO corresponding to the bit is not used to send the first information. The bitmap in the second information may be {0100}, or the bitmap in the second information may be {0101}.

It should be noted that, in another embodiment of the present disclosure, a bit in the bitmap may correspond to one CG period in the first time window, and the bit value carried by the bit in the bitmap is used to indicate whether to use the CG period corresponding to the bit to send the first information, or the bit value carried by the bit in the bitmap is used to indicate whether to use the TO in the CG period corresponding to the bit to send the first information. Alternatively, the correspondence between the bits in the bitmap and the CG periods is similar to the aforementioned correspondence between the bits in the bitmap and the TOs, which will not be repeated here. Alternatively, for the above-mentioned introduction of "using the CG period corresponding to the bit to send the first information" and "using the TO in the CG period corresponding to the bit to send the first information", reference may be made to the above-mentioned embodiment of FIG. 2b.

At step 2302, the terminal determines a sending resource corresponding to first information based on the second information.

In some embodiments, the terminal may determine the sending resource for sending the first information based on the bit value carried by each bit in the bitmap in the second information. Alternatively, when the bit value carried by a bit in the bitmap indicates that the TO corresponding to the bit is used to send the first information, the TO may be determined as the sending resource of the first information.

For example, it is assumed that the first one of the bits in the bitmap corresponds to the first one of the TOs in the first time window, the second one of the bits in the bitmap corresponds to the second one of the TOs in the first time window, the third one of the bits in the bitmap corresponds to the third one of the TOs in the first time window, and the fourth one of the bits in the bitmap corresponds to the fourth one the TOs in the first time window. It is assumed that when the bit value carried by the bit is 1, it indicates that the TO corresponding to the bit is used to send the first information; when the bit value carried by the bit is 0, it indicates that the TO corresponding to the bit is not used to send the first information. In this case, if the bitmap in the second information received by the terminal may be {0100}, it means that the sending resource corresponding to the first information includes the second one of the TOs in the first time window, and if the bitmap in the second information received by the terminal may be {0101}, it means that the sending resource corresponding to the first information includes the second one and the fourth one of the TOs in the first time window.

In addition, in some other embodiments, when the bitmap corresponds to the CG period, if the bit value carried by a bit in the bitmap indicates that the CG period corresponding to the bit is used to send the first information, then the sending resource of the first information may be determined from the CG period, such as all TOs in the CG period may be determined as the sending resource of the first information; or, if the bit value carried by a bit in the bitmap indicates that the TO in the CG period corresponding to the bit is used to send the first information, then the sending resource of the first information may be determined from the TO in the CG period, such as at least part of the TO (such as the first half of the TO) in the CG period may be determined as the sending resource of the first information.

At step 2303, the terminal uses the sending resource corresponding to the first information to send the first information to the network device.

At step 2304, based on the first information, the network device schedules the TO not used by the terminal to be reused.

For detailed description of steps 2303-2304, reference may be made to the embodiment of FIG. 2a above.

The resource determination method involved in the embodiments of the present disclosure may include at least one of steps S2301 to S2304. For example, step S2301 may be implemented as an independent embodiment, step S2302 may be implemented as an independent embodiment, steps S2301+S2302 may be implemented as an independent embodiment, and steps S2301+S2302+S2303 may be implemented as an independent embodiment, which is not limited herein.

In some embodiments, steps S2303 and S2304 are optional, and one or more of these steps may be omitted or replaced in different embodiments.

In these implementations or embodiments, unless there is any contradiction, each step can be independent, arbitrarily combined or exchanged in order, the optional implementations or optional examples can be arbitrarily combined, and can be arbitrarily combined with any steps of other implementations or other examples.

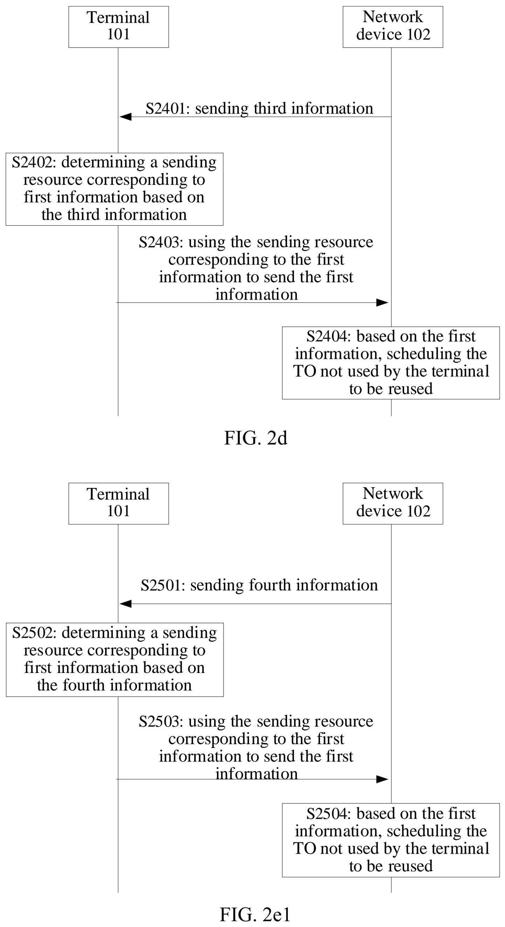

FIG. 2d is an interactive schematic diagram of a resource determination method according to an embodiment of the present disclosure. As shown in FIG. 2d, embodiments of the present disclosure relate to a resource determination method used in a communication system 100, and the method includes the following steps.

At step 2401, a network device sends third information to a terminal.

In some embodiments, the terminal 101 may receive the third information.

In some embodiments, the third information may be used to configure a total number of TOs for sending the first information. Alternatively, the total number of the TOs for sending the first information may be, for example, NumOfTOwithUCI. Alternatively, the total number of the TOs for sending the first information may be less than or equal to the total number of TOs in the first time window, or the total number of the TOs for sending the first information may be less than or equal to the total number of the TOs in the first time window minus 1.

For detailed introduction to the first information and the first time window, reference may be to the embodiment of FIG. 2a above.

In some embodiments, the access network device 102 sends a first signaling, and the first signaling may include the third information. Alternatively, the terminal 101 may receive the first signaling. The first signaling may be, for example, a radio resource control (RRC) signaling, but is not limited thereto, and may also be other signaling (such as downlink control information (DCI) signaling, etc.).

For example, in some embodiments, it is assumed that 9 TOs are included in the first time window. The third information may be used to configure that the total number of the TOs for sending the first information is 1, 2, 4 or 8.

It should be noted that, in another embodiment of the present disclosure, the third information may also be used to configure the total number of CG periods for sending the first information. Alternatively, the total number of the CG periods for sending the first information may be less than or equal to the total number of the TOs in the first time window, or the total number of the TOs for sending the first information may be less than or equal to the total number of the TOs in the first time window minus 1.

At step 2402, the terminal determines a sending resource corresponding to first information based on the third information.

In some embodiments, the terminal may determine the TO for sending the first information from the first time window based on the total number of TOs for sending the first information configured by the third information. Alternatively, when the total number of the TOs for sending the first information configured by the third information is s, the terminal may arbitrarily select s TOs from the first time window as the sending resource corresponding to the first information. For example, the terminal may use the i-th TO to the (i+s)-th TO in the first time window as the sending resource corresponding to the first information, where i is a positive integer, i is less than the total number of the TOs in the first time window, or i is less than the total number of the TOs in the first time window minus 1. For example, the terminal may use the first s TOs in the first time window as the sending resource corresponding to the first information, or the terminal may use the last s TOs in the first time window as the sending resource corresponding to the first information, or the terminal may use the 2nd TO to the (2+s)-th TO in the first time window as the sending resource corresponding to the first information.

For example, it is assumed that 9 TOs are included in the first time window. When the third information may configure that the total number of the TOs for sending the first information is 1, the terminal may determine the first TO in the first time window (i.e., the first one of the TOs in the first time window) as the sending resource corresponding to the first information. When the third information may configure that the total number of the TOs for sending the first information is 4, the terminal may determine the first 4 TOs in the first time window (i.e., the first one, the second one, the third one, and the fourth one of the TOs in the first time window) as the sending resource corresponding to the first information.

In other embodiments, the terminal may determine the CG period for sending the first information from the first time window based on the total number of the CG periods for sending the first information configured by the third information. Alternatively, when the total number of the CG periods for sending the first information configured by the third information is m, the terminal may arbitrarily select m CG periods from the first time window as the sending resource corresponding to the first information. For example, the terminal may use the i-th CG periods to the (i+m)-th CG period in the first time window as the sending resource corresponding to the first information, where i is a positive integer, i is less than the total number of the CG periods in the first time window, or i is less than the total number of the CG periods in the first time window minus 1. For example, the terminal may use the first m CG periods in the first time window as the sending resource corresponding to the first information, or the terminal may use the last m CG periods in the first time window as the sending resource corresponding to the first information, or the terminal may use the 2nd CG period to the (2+m)-th CG period in the first time window as the sending resource corresponding to the first information.

Alternatively, the above-mentioned "using the CG period as the sending resource corresponding to the first information" can be understood as: using all TOs in the CG period as the sending resource corresponding to the first information, or using at least part of the TOs (such as the first half of the TOs) in the CG period as the sending resource corresponding to the first information.

At step 2403, the terminal uses the sending resource corresponding to the first information to send the first information to the network device.

At step 2404, based on the first information, the network device schedules the TO not used by the terminal to be reused.

For detailed description of steps 2403-2404, reference may be made to the embodiment of FIG. 2a above.

The resource determination method involved in the embodiments of the present disclosure may include at least one of steps S2401 to S2404. For example, step S2401 may be implemented as an independent embodiment, step S2402 may be implemented as an independent embodiment, steps S2401+S2402 may be implemented as an independent embodiment, and steps S2401+S2402+S2403 may be implemented as an independent embodiment, which is not limited herein.

In some embodiments, steps S2403 and S2404 are optional, and one or more of these steps may be omitted or replaced in different embodiments.

In these implementations or embodiments, unless there is any contradiction, each step can be independent, arbitrarily combined or exchanged in order, the optional implementations or optional examples can be arbitrarily combined, and can be arbitrarily combined with any steps of other implementations or other examples.

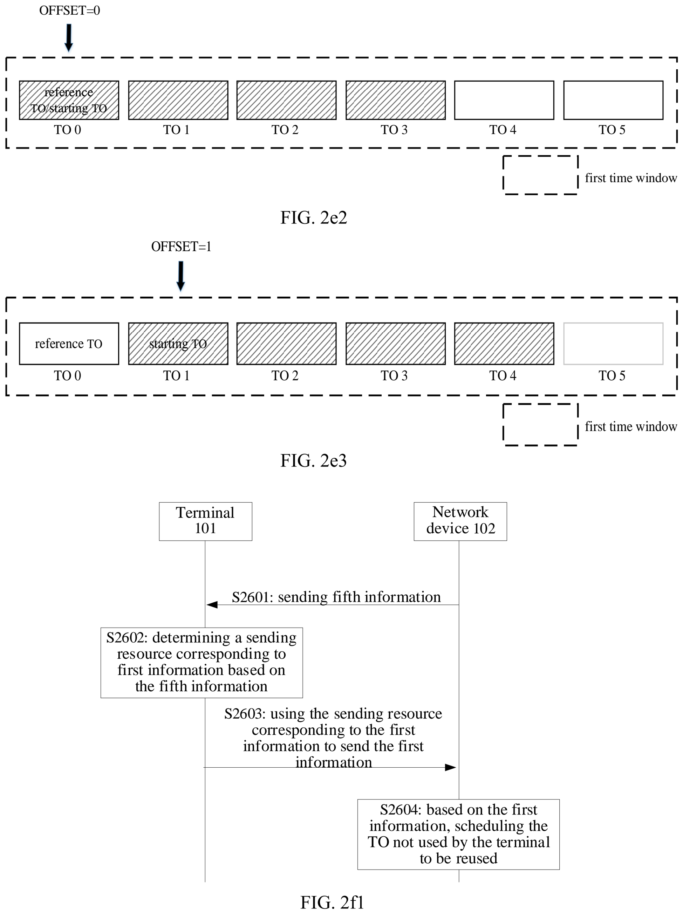

FIG. 2e1 is an interactive schematic diagram of a resource determination method according to an embodiment of the present disclosure. As shown in FIG. 2e1, embodiments of the present disclosure relate to a resource determination method used in a communication system 100, and the method includes the following steps.

At step 2501, a network device sends fourth information to a terminal.

In some embodiments, the terminal 101 may receive the fourth information.

In some embodiments, the fourth information may include a first offset and a total number of TOs for sending first information. Alternatively, the first offset may be, for example, OffsetOfTOwithUCI.

Alternatively, the first offset may be used to determine the first one of TOs for sending the first information in a first time window. Alternatively, the first one of the TOs for sending the first information in the first time window may be a TO offset from a first TO in the first time window by the first offset. Alternatively, the first TO may be any TO in the first time window, or the first TO may be any TO except the last one of the TOs in the first time window. For example, assuming that the first TO is the first one of the TOs in the first time window, and the first offset indicates: offset by 1 TO, the first one of the TOs for sending the first information in the first time window determined based on the first offset may be: the second one of the TOs in the first time window.

Alternatively, the total number of the TOs for sending the first information may be less than or equal to the total number of the TOs in the first time window, or the total number of the TOs for sending the first information may be less than or equal to the total number of the TOs in the first time window minus 1.

For detailed introduction to the first information and the first time window, reference may be to the embodiment of FIG. 2a above.

In some embodiments, the access network device 102 sends a first signaling, and the first signaling may include the fourth information. Alternatively, the terminal 101 may receive the first signaling. The first signaling may be, for example, a radio resource control (RRC) signaling, but is not limited thereto, and may also be other signaling (such as downlink control information (DCI) signaling, etc.).

For example, in some embodiments, it is assumed that 6 TOs are included in the first time window. The fourth information may include that, for example: the first offset is: offset by 1 TO; and the total number of the TOs for sending the first information is: 4. Or the fourth information may include that, for example: the first offset is: offset by zero TO; and the total number of the TOs for sending the first information is: 4.

It should be noted that, in another embodiment of the present disclosure, the fourth information may also be used to configure a second offset and a total number of CG periods for sending the first information. Alternatively, the second offset may be used to determine the first one of CG periods for sending the first information in the first time window. Alternatively, the first one of the CG periods for sending the first information in the first time window may be: a CG period offset from a first CG period in the first time window by the second offset. Alternatively, the first CG period may be any CG period in the first time window, or the first CG period may be any CG period except the last one of CG periods in the first time window. For example, assuming that the first CG period is the first one of the CG periods in the first time window, and the second offset indicates: offset by 1 CG period, the first one of the CG periods for sending the first information in the first time window determined based on the second offset is: the second one of the CG periods in the first time window.

Alternatively, the total number of the CG periods for sending the first information may be less than or equal to the total number of the CG periods in the first time window, or the total number of the CG periods for sending the first information may be less than or equal to the total number of the CG periods in the first time window minus 1.

At step 2502, the terminal determines a sending resource corresponding to first information based on the fourth information.

In some embodiments, the method for the terminal to determine the sending resource corresponding to the first information based on the fourth information may be described as follows: the terminal first determines the first one of the TOs for sending the first information in the first time window based on the first offset and the first TO in the first time window, and then determines the TOs for sending the first information from the first time window based on the first one of the TOs for sending the first information and the total number of the TOs for sending the first information.

Alternatively, for detailed introduction to "the first TO, the terminal determining the first one of the TOs for sending the first information in the first time window based on the first offset and the first TO in the first time window", reference may be made to the description of the aforementioned step 2501.

Alternatively, the above-mentioned method of "determining the TOs for sending the first information from the first time window based on the first one of the TOs for sending the first information and the total number of the TOs for sending the first information" may include: determining the first TO and h TOs after the first TO as the TOs for sending the first information, where h is the total number of the TOs for sending the first information minus 1.

For example, FIGs. 2e2 and 2e3 are schematic diagrams of determining the sending resource corresponding to the first information based on the fourth information according to an embodiment of the present disclosure. As shown in FIG. 2e2, assuming that 6 TOs are included in the first time window, and the above-mentioned first TO in the first time window (i.e., the reference TO shown in FIG. 2e2) is pre-defined as the first one of the TOs in the first time window, then when the fourth information includes that: the first offset is: offset by zero TO, and the total number of the TOs for sending the first information is: 4, the terminal determines, based on the first offset and the first TO in the first time window, that the first one of the TOs for sending the first information (i.e., the starting TO in FIG. 2e) is: the first one of the TOs in the first time window, and then, combined with the total number "4" of the TOs for sending the first information, determines that the TOs for sending the first information in the first time window include: the first one (i.e., TO0 in FIG. 2e), the second one (i.e., TO1 in FIG. 2e), the third one (i.e., TO2 in FIG. 2e), and the fourth one (i.e., TO3 in FIG. 2e) of the TOs in the first time window.

Alternatively, as shown in FIG. 2e3, when the fourth information includes that: the first offset is: offset by one TO, and the total number of the TOs for sending the first information is: 4, the terminal determines, based on the first offset and the first TO in the first time window, that the first one of the TOs for sending the first information (i.e., the starting TO in FIG. 2e) is: the second one of the TOs in the first time window, and then, combined with the total number "4" of the TOs for sending the first information, determines that the TOs for sending the first information in the first time window include: the second one (i.e., TO1 in FIG. 2e), the third one (i.e., TO2 in FIG. 2e), the fourth one (i.e., TO3 in FIG. 2e), and the fifth one (i.e., TO4 in FIG. 2e) of the TOs in the first time window.

In other embodiments, the terminal may also determine the CG periods for sending the first information from the first time window based on the second offset and the total number of CG periods for sending the first information included in the fourth information. The specific method may be described as follows: the terminal first determines the first one of the CG periods for sending the first information in the first time window based on the second offset and a first CG period in the first time window, and then determines the CG periods for sending the first information from the first time window based on the first one of the CG periods for sending the first information and the total number of the CG periods for sending the first information.

Alternatively, for detailed introduction to "the first CG period, the terminal determining the first one of the TOs for sending the first information in the first time window based on the second offset and the first CG period in the first time window", reference may be made to the description of the aforementioned step 2501.

Alternatively, the above-mentioned method of "determining the CG periods for sending the first information from the first time window based on the first one of the CG periods for sending the first information and the total number of the CG periods for sending the first information" may include: determining the first CG period and f CG periods after the first CG period as the CG periods for sending the first information, where f is the total number of the CG periods for sending the first information minus 1.

Alternatively, the above-mentioned "CG period for sending the first information" may be understood as, for example: using all TOs in the CG period to send the first information, or using at least part of the TOs (such as the first half of the TOs) in the CG period to send the first information.

At step 2503, the terminal uses the sending resource corresponding to the first information to send the first information to the network device.

At step 2504, based on the first information, the network device schedules the TO not used by the terminal to be reused.

For detailed description of steps 2503-2504, reference may be made to the embodiment of FIG. 2a above.

The resource determination method involved in the embodiments of the present disclosure may include at least one of steps S2501 to S2504. For example, step S2501 may be implemented as an independent embodiment, step S2502 may be implemented as an independent embodiment, steps S2501+S2502 may be implemented as an independent embodiment, and steps S2501+S2502+S2503 may be implemented as an independent embodiment, which is not limited herein.

In some embodiments, steps S2503 and S2504 are optional, and one or more of these steps may be omitted or replaced in different embodiments.

In these implementations or embodiments, unless there is any contradiction, each step can be independent, arbitrarily combined or exchanged in order, the optional implementations or optional examples can be arbitrarily combined, and can be arbitrarily combined with any steps of other implementations or other examples.

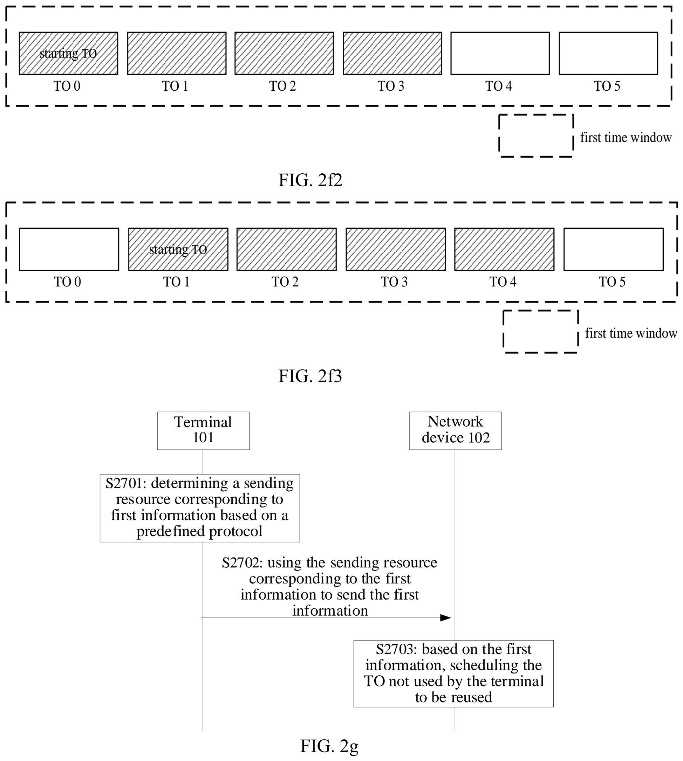

FIG. 2f1 is an interactive schematic diagram of a resource determination method according to an embodiment of the present disclosure. As shown in FIG. 2f1, embodiments of the present disclosure relate to a resource determination method used in a communication system 100, and the method includes the following steps.

At step 2601, a network device sends fifth information to a terminal.

In some embodiments, the terminal 101 may receive the fifth information.

In some embodiments, the fifth information may include a third index and a total number of TOs for sending first information. The third index may be an index corresponding to the first one of the TOs for sending the first information in the first time window. Alternatively, the third index may be an index corresponding to any TO in the first time window. Alternatively, the third index may be an index corresponding to any TO other than the last one of the TOs in the first time window.

Alternatively, the total number of the TOs for sending the first information may be less than or equal to the total number of the TOs in the first time window, or the total number of the TOs for sending the first information may be less than or equal to the total number of the TOs in the first time window minus 1.

For detailed introduction to the first information and the first time window, reference may be to the embodiment of FIG. 2a above.

In some embodiments, the access network device 102 sends a first signaling, and the first signaling may include the fifth information. Alternatively, the terminal 101 may receive the first signaling. The first signaling may be, for example, a radio resource control (RRC) signaling, but is not limited thereto, and may also be other signaling (such as downlink control information (DCI) signaling, etc.).

For example, in some embodiments, it is assumed that 6 TOs are included in the first time window. The fifth information may include that, for example: the third index is: an index corresponding to the first one of the TOs in the first time window; and the total number of the TOs for sending the first information is: 4. Or the fifth information may include that, for example: the third index is: an index corresponding to the second one of the TOs in the first time window; and the total number of the TOs for sending the first information is: 4.

It should be noted that, in another embodiment of the present disclosure, the fifth information may also include a fourth index and a total number of CG periods for sending the first information; the fourth index may be an index corresponding to the first one of the CG periods for sending the first information in the first time window. Alternatively, the fourth index may be an index corresponding to any CG period in the first time window, or the fourth index may be an index corresponding to any CG period other than the last one of the CG periods in the first time window.

Alternatively, the total number of the CG periods for sending the first information may be less than or equal to the total number of the CG periods in the first time window, or the total number of the CG periods for sending the first information may be less than or equal to the total number of the CG periods in the first time window minus 1.

At step 2602, the terminal determines a sending resource corresponding to first information based on the fifth information.

In some embodiments, the method for the terminal to determine the sending resource corresponding to the first information based on the fifth information may include: determining the TO indicated by the third index and k TOs after the TO indicated by the third index as the TOs for sending the first information, where k is the total number of the TOs for sending the first information minus 1.

For example, FIGs. 2f2 and 2f3 are schematic diagrams of determining the sending resource corresponding to the first information based on the fifth information according to an embodiment of the present disclosure. Assume that 6 TOs are included in the first time window. When the fifth information includes that: the third index is: an index corresponding to the first one of the TOs in the first time window, and the total number of the TOs for sending the first information is: 4, the terminal determines, based on the third index and the total number of the TOs for sending the first information, that the TOs for sending the first information include: the first one (i.e., TO0 in FIG. 2e), the second one (i.e., TO1 in FIG. 2e), the third one (i.e., TO2 in FIG. 2e), and the fourth one (i.e., TO3 in FIG. 2e) of the TOs in the first time window. Or, as shown in FIG. 2f3, when the fifth information includes that: the third index is: an index corresponding to the second one of the TOs in the first time window, and the total number of the TOs for sending the first information is: 4, the terminal determines, based on the third index and the total number of the TOs for sending the first information, that the TOs for sending the first information include: the second one (i.e., TO1 in FIG. 2e), the third one (i.e., TO2 in FIG. 2e), the fourth one (i.e., TO3 in FIG. 2e), and the fifth one (i.e., TO4 in FIG. 2e) of the TOs in the first time window.

In other embodiments, the terminal may also determine CG periods for sending the first information from the first time window based on the fourth index and the total number of the CG periods for sending the first information included in the fifth information. The specific method may include: determining the CG period indicated by the fourth index and h CG periods after the CG period indicated by the fourth index as the CG periods for sending the first information, where h is the total number of the CG periods for sending the first information minus 1.

Alternatively, the above-mentioned "CG period for sending the first information" may be understood as, for example: using all TOs in the CG period to send the first information, or using at least part of the TOs (such as the first half of the TOs) in the CG period to send the first information.

At step 2603, the terminal uses the sending resource corresponding to the first information to send the first information to the network device.

At step 2604, based on the first information, the network device schedules the TO not used by the terminal to be reused.

For detailed description of steps 2603-2604, reference may be made to the embodiment of FIG. 2a above.

The resource determination method involved in the embodiments of the present disclosure may include at least one of steps S2601 to S2604. For example, step S2601 may be implemented as an independent embodiment, step S2602 may be implemented as an independent embodiment, steps S2601+S2602 may be implemented as an independent embodiment, and steps S2601+S2602+S2603 may be implemented as an independent embodiment, which is not limited herein.

In some embodiments, steps S2503 and S2504 are optional, and one or more of these steps may be omitted or replaced in different embodiments.

In these implementations or embodiments, unless there is any contradiction, each step can be independent, arbitrarily combined or exchanged in order, the optional implementations or optional examples can be arbitrarily combined, and can be arbitrarily combined with any steps of other implementations or other examples.

FIG. 2g is an interactive schematic diagram of a resource determination method according to an embodiment of the present disclosure. As shown in FIG. 2g, embodiments of the present disclosure relate to a resource determination method used in a communication system 100, and the method includes the following steps.

At step 2701, a terminal determines a sending resource corresponding to first information based on a predefined protocol.

In some embodiments, the method of the terminal determining the sending resource corresponding to the first information based on the predefined protocol may include at least one of:

determining the first one of TOs in a first time window as the sending resource corresponding to the first information;

determining the first and $\left\lfloor \dfrac{n}{2} \right\rfloor$-th ones of TOs in a first time window as the sending resource corresponding to the first information, where n is a total number of the TOs in the first time window, and $\lfloor \cdot \rfloor$ is a round-down function; for example, when the total number of the TOs included in the first time window is 7, the first and third ones of the TOs in the first time window are determined as the sending resource corresponding to the first information;

determining the first and $\left\lceil \dfrac{n}{2} \right\rceil$-th ones of TOs in a first time window as the sending resource corresponding to the first information, where n is a total number of the TOs in the first time window, and $\lceil \cdot \rceil$ is a round-up function; for example, when the total number of the TOs included in the first time window is 7, the first and fourth ones of the TOs in the first time window are determined as the sending resource corresponding to the first information;

determining all TOs in a first time window as the sending resource corresponding to the first information;

determining first $\left\lfloor \dfrac{n}{2} \right\rfloor$ ones of TOs in a first time window as the sending resource corresponding to the first information, where n is a total number of the TOs in the first time window, and $\lfloor \cdot \rfloor$ is a round-down function; for example, when the total number of the TOs included in the first time window is 7, the first three ones of the TOs in the first time window are determined as the sending resource corresponding to the first information;

determining first $\dfrac{n}{2}$ ones of TOs in a first time window as the sending resource corresponding to the first information, where n is a total number of the TOs in the first time window; for example, when the total number of the TOs included in the first time window is 8, the first four ones of the TOs in the first time window are determined as the sending resource corresponding to the first information; or

determining first $\left\lceil \dfrac{n}{2} \right\rceil$ ones of TOs in a first time window as the sending resource corresponding to the first information, where n is a total number of the TOs in the first time window, and $\lceil \cdot \rceil$ is a round-up function; for example, when the total number of the TOs included in the first time window is 7, the first four ones of the TOs in the first time window are determined as the sending resource corresponding to the first information.

At step 2702, the terminal uses the sending resource corresponding to the first information to send the first information to the network device.

In some embodiments, when the terminal uses the sending resource corresponding to the first information to send the first information to the network device, the network device may receive the first information on the sending resource corresponding to the first information. Alternatively, the network device may first determine the sending resource corresponding to the first information based on the predefined protocol, and then receive the first information on the sending resource corresponding to the first information.

Alternatively, the method of the network device determining the sending resource corresponding to the first information based on the predefined protocol may include at least one of:

determining the first one of TOs in a first time window as the sending resource corresponding to the first information;

determining the first and $\left\lfloor \dfrac{n}{2} \right\rfloor$-th ones of TOs in a first time window as the sending resource corresponding to the first information, where n is a total number of the TOs in the first time window, and $\lfloor \cdot \rfloor$ is a round-down function; for example, when the total number of the TOs included in the first time window is 7, the first and third ones of the TOs in the first time window are determined as the sending resource corresponding to the first information;

determining the first and $\left\lceil \dfrac{n}{2} \right\rceil$-th ones of TOs in a first time window as the sending resource corresponding to the first information, where n is a total number of the TOs in the first time window, and $\lceil \cdot \rceil$ is a round-up function; for example, when the total number of the TOs included in the first time window is 7, the first and fourth ones of the TOs in the first time window are determined as the sending resource corresponding to the first information;

determining all TOs in a first time window as the sending resource corresponding to the first information;

determining first $\left\lfloor \dfrac{n}{2} \right\rfloor$ ones of TOs in a first time window as the sending resource corresponding to the first information, where n is a total number of the TOs in the first time window, and $\lfloor . \rfloor$ is a round-down function; for example, when the total number of the TOs included in the first time window is 7, the first three ones of the TOs in the first time window are determined as the sending resource corresponding to the first information;

determining first $\frac{n}{2}$ ones of TOs in a first time window as the sending resource corresponding to the first information, where n is a total number of the TOs in the first time window; for example, when the total number of the TOs included in the first time window is 8, the first four ones of the TOs in the first time window are determined as the sending resource corresponding to the first information; or

determining first $\lceil \frac{n}{2} \rceil$ ones of TOs in a first time window as the sending resource corresponding to the first information, where n is a total number of the TOs in the first time window, and $\lceil . \rceil$ is a round-up function; for example, when the total number of the TOs included in the first time window is 7, the first four ones of the TOs in the first time window are determined as the sending resource corresponding to the first information.

At step 2703, based on the first information, the network device schedules the TO not used by the terminal to be reused.

For detailed description of step 2703, reference may be made to the embodiment of FIG. 2a above.

The resource determination method involved in the embodiments of the present disclosure may include at least one of steps S2701 to S2703. For example, step S2701 may be implemented as an independent embodiment, step S2702 may be implemented as an independent embodiment, steps S2701+S2702 may be implemented as an independent embodiment, which is not limited herein.

In the implementation or embodiment, unless there is any contradiction, each step can be independent, arbitrarily combined or exchanged in order, the optional implementations or optional examples can be arbitrarily combined, and can be arbitrarily combined with any steps of other implementations or other examples.

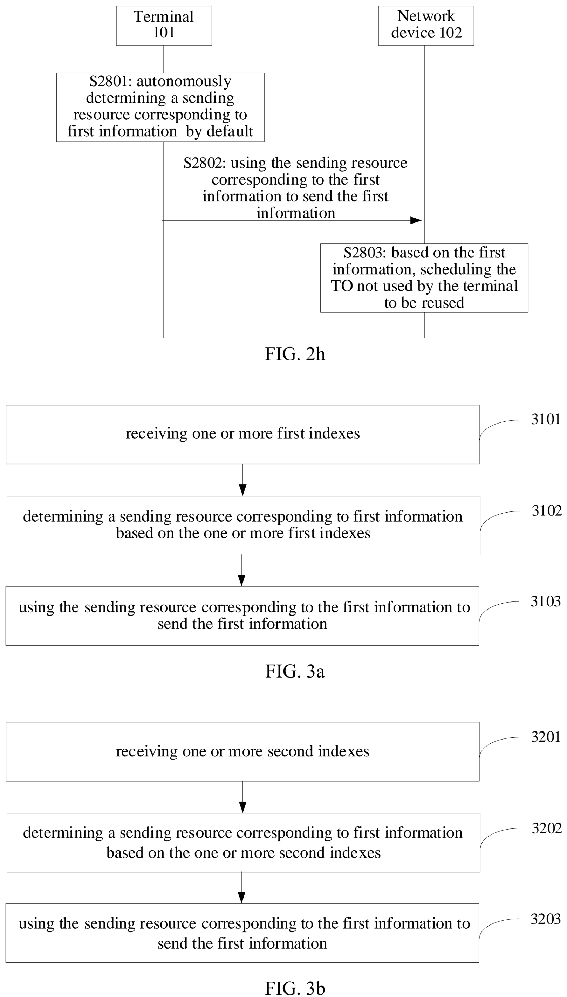

FIG. 2h is an interactive schematic diagram of a resource determination method according to an embodiment of the present disclosure. As shown in FIG. 2h, embodiments of the present disclosure relate to a resource determination method used in a communication system 100, and the method includes the following steps.

At step 2801, a terminal autonomously determines a sending resource corresponding to first information by default.

In some embodiments, the terminal may autonomously determine the sending resource corresponding to the first information by default when the network device does not configure the sending resource corresponding to the first information.

In some embodiments, the method of the terminal autonomously determining the sending resource corresponding to the first information by default may include at least one of:

determining the first one of TOs in a first time window as the sending resource corresponding to the first information;

determining the first and $\lfloor \frac{n}{2} \rfloor$-th ones of TOs in a first time window as the sending resource corresponding to the first information, where n is a total number of the TOs in the first time window, and $\lfloor . \rfloor$ is a round-down function; for example, when the total number of the TOs included in the first time window is 7, the first and third ones of the TOs in the first time window are determined as the sending resource corresponding to the first information;

determining the first and $\lceil \frac{n}{2} \rceil$-th ones of TOs in a first time window as the sending resource corresponding to the first information, where n is a total number of the TOs in the first time window, and $\lceil . \rceil$ is a round-up function; for example, when the total number of the TOs included in the first time window is 7, the first and fourth ones of the TOs in the first time window are determined as the sending resource corresponding to the first information;

determining all TOs in a first time window as the sending resource corresponding to the first information;

determining first $\lfloor \frac{n}{2} \rfloor$ ones of TOs in a first time window as the sending resource corresponding to the first information, where n is a total number of the TOs in the first time window, and $\lfloor . \rfloor$ is a round-down function; for example, when the total number of the TOs included in the first time window is 7, the first three ones of the TOs in the first time window are determined as the sending resource corresponding to the first information;

determining first $\frac{n}{2}$ ones of TOs in a first time window as the sending resource corresponding to the first information, where n is a total number of the TOs in the first time window; for example, when the total number of the TOs included in the first time window is 8, the first four ones of the TOs in the first time window are determined as the sending resource corresponding to the first information; or

determining first $\left\lceil \dfrac{n}{2} \right\rceil$ ones of TOs in a first time window as the sending resource corresponding to the first information, where n is a total number of the TOs in the first time window, and $\lceil . \rceil$ is a round-up function; for example, when the total number of the TOs included in the first time window is 7, the first four ones of the TOs in the first time window are determined as the sending resource corresponding to the first information.

Alternatively, in some embodiments, after the terminal autonomously determines the sending resource corresponding to the first information by default, the terminal may report the sending resource corresponding to the first information to the network device, so that the network device may subsequently receive the first information sent by the terminal on the sending resource corresponding to the first information.

**In** some embodiments, the transmission resource corresponding to the first information reported by the terminal includes the first one of the TOs in the first time window; or

the transmission resource corresponding to the first information reported by the terminal includes the first and $\left\lfloor \dfrac{n}{2} \right\rfloor$-th ones of the TOs in the first time window that are determined as the sending resource corresponding to the first information, where n is a total number of the TOs in the first time window, and $\lfloor . \rfloor$ is a round-down function; or

the transmission resource corresponding to the first information reported by the terminal includes the first and $\left\lceil \dfrac{n}{2} \right\rceil$-th ones of the TOs in the first time window that are determined as the sending resource corresponding to the first information, where n is a total number of the TOs in the first time window, and $\lceil . \rceil$ is a round-up function; or

the transmission resource corresponding to the first information reported by the terminal includes all TOs in the first time window; or

the transmission resource corresponding to the first information reported by the terminal includes first $\left\lfloor \dfrac{n}{2} \right\rfloor$ ones of the TOs in the first time window that are determined as the sending resource corresponding to the first information, where n is a total number of the TOs in the first time window, and $\lfloor . \rfloor$ is a round-down function; or

the transmission resource corresponding to the first information reported by the terminal includes first $\dfrac{n}{2}$ ones of the TOs in the first time window that are determined as the sending resource corresponding to the first information, where n is a total number of the TOs in the first time window; or

the transmission resource corresponding to the first information reported by the terminal includes first $\left\lceil \dfrac{n}{2} \right\rceil$ ones of the TOs in the first time window that are determined as the sending resource corresponding to the first information, where n is a total number of the TOs in the first time window, and $\lceil . \rceil$ is a round-up function.

At step 2802, the terminal uses the sending resource corresponding to the first information to send the first information to the network device.

At step 2803, based on the first information, the network device schedules the TO not used by the terminal to be reused.

For detailed description of step 2803, reference may be made to the embodiment of FIG. 2a above.

The resource determination method involved in the embodiments of the present disclosure may include at least one of steps S2801 to S2803. For example, step S2801 may be implemented as an independent embodiment, step S2802 may be implemented as an independent embodiment, steps S2801+S2802 may be implemented as an independent embodiment, which is not limited herein.

In these implementations or embodiments, unless there is any contradiction, each step can be independent, arbitrarily combined or exchanged in order, the optional implementations or optional examples can be arbitrarily combined, and can be arbitrarily combined with any steps of other implementations or other examples.

In some embodiments of the present disclosure, the embodiments of the present disclosure relate to a resource determination method used in a communication system 100, and the method includes the following steps.

At step 2901, a network device sends at least one of one or more first indexes, one or more second indexes, second information, third information, fourth information, or fifth information to a terminal.

**At** step 2902, the terminal determines a sending resource corresponding to first information based on at least one of the one or more first indexes, the one or more second indexes, the second information, the third information, the fourth information, or the fifth information.

Alternatively, in some embodiments, when the terminal receives any one of the one or more first indexes, the one or more second indexes, the second information, the third information, the fourth information, or the fifth information, for example, when the one or more first indexes are received, or when the second information is received, the sending resource corresponding to the first information may be determined based on the received content. When the terminal receives any ones of the one or more first indexes, the one or more second indexes, the second information, the third information, the fourth information, or the fifth information, for example, when the one or more first indexes and the second information are received, or when the second information and the third information are received, the terminal may select any one content from all the content it has received to determine the sending resource corresponding to the first information. For example, when the terminal receives the second information and the third information, the terminal may choose to determine the sending resource corresponding to the first information based on the second information, or the terminal may determine the sending resource corresponding to the first information based on various contents it receives. For example, when the terminal receives the second information and the third information, the terminal may determine the sending resource corresponding to the first information based on the second information and the third information, or the terminal may select the content with the highest priority based on the usage priority corresponding to each content it receives to determine the sending resource corresponding to the first information. Alternatively, the above-mentioned usage priority may be configured to the terminal by the network device, may be predefined based on the protocol, or may be determined autonomously by the terminal.

At step 2903, the terminal determines the sending resource corresponding to the first information based on the predefined protocol.

At step 2904, the terminal autonomously determines the sending resource corresponding to the first information by default.

In some embodiments, any one of the above steps 2902, 2903, and 2904 may be executed, for example, step 2902, step 2903, or step 2904 may be executed; in other embodiments, any two of the above steps 2902, 2903, and 2904 may be executed, for example, step 2902 and step 2903 may be executed, or step 2902 and step 2904 may be executed; in yet other embodiments, all of the above steps 2902, 2903, and 2904 may be executed.

In some embodiments, there is no limitation on the execution order among the above steps 2902, 2903 and 2904. Steps 2902, 2903 and 2904 may be executed simultaneously, or steps 2902, 2903 and 2904 may be executed in sequence, or steps 2903, 2904 and 2902 may be executed in sequence, which are not limited herein.

At step 2905, the terminal uses the sending resource corresponding to the first information to send the first information to the network device.

At step 2906, based on the first information, the network device schedules the TO not used by the terminal to be reused.

For detailed description of steps 2901-2906, reference may be made to the embodiments of FIG. 2a-FIG. 2h above.

In these implementations or embodiments, unless there is any contradiction, each step can be independent, arbitrarily combined or exchanged in order, the optional implementations or optional examples can be arbitrarily combined, and can be arbitrarily combined with any steps of other implementations or other examples.

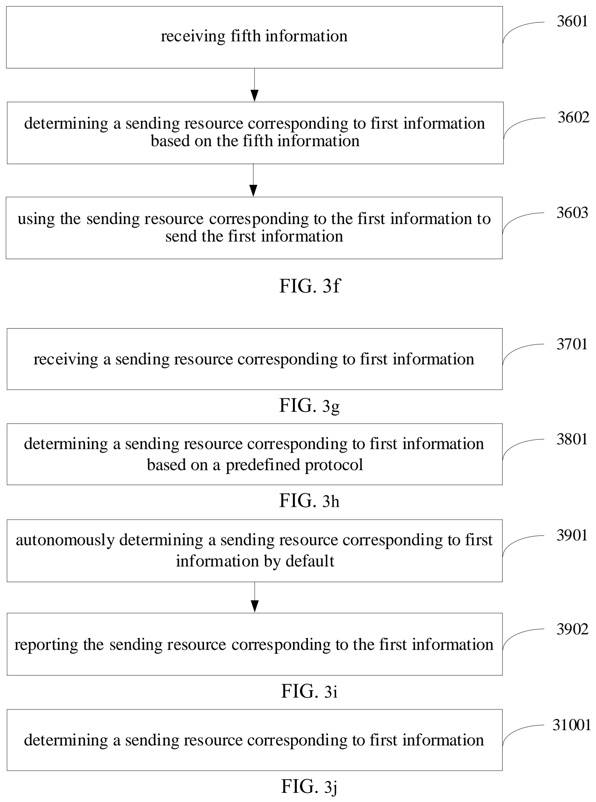

FIG. 3a is a flowchart of a resource determination method according to an embodiment of the present disclosure. As shown in FIG. 3a, embodiments of the present disclosure relate to a resource determination method used in a terminal 101, and the method includes the following steps.

At step 3101, one or more first indexes are received.

Alternatively, the terminal may receive one or more first indexes sent by a network device.

At step 3102, a sending resource corresponding to first information is determined based on the one or more first indexes.

Alternatively, the terminal may determine one or more TOs corresponding respectively to the one or more first indexes as the sending resource corresponding to the first information.

At step 3103, the sending resource corresponding to the first information is used to send the first information.

For detailed description of steps 3101-3103, reference may be made to the embodiments of FIG. 2a-FIG. 2h above.

The resource determination method involved in the embodiments of the present disclosure may include at least one of steps S3101 to S3103. For example, step S3101 may be implemented as an independent embodiment, step S3102 may be implemented as an independent embodiment, steps S3101+S3102 may be implemented as an independent embodiment, which is not limited herein.

In these implementations or embodiments, unless there is any contradiction, each step can be independent, arbitrarily combined or exchanged in order, the optional implementations or optional examples can be arbitrarily combined.

FIG. 3b is a flowchart of a resource determination method according to an embodiment of the present disclosure. As shown in FIG. 3b, embodiments of the present disclosure relates to a resource determination method used in a terminal 101, and the method includes the following steps.

At step 3201, one or more second indexes are received.

Alternatively, the terminal may receive one or more second indexes sent by a network device.

At step 3202, a sending resource corresponding to first information is determined based on the one or more second indexes.

Alternatively, the terminal may determine one or more TOs in one or more CG periods corresponding respectively to the one or more second indexes as the sending resource corresponding to the first information.

For detailed description of steps 3201-3202, reference may be made to the embodiments of FIG. 2a-FIG. 2h above.

**At** step 3203, the sending resource corresponding to the first information is used to send the first information.

The resource determination method involved in the embodiments of the present disclosure may include at least one of steps S3201 to S3203. For example, step S3201 may be implemented as an independent embodiment, step S3202 may be implemented as an independent embodiment, steps S3201+S3202 may be implemented as an independent embodiment, which is not limited herein.

In these implementations or embodiments, unless there is any contradiction, each step can be independent, arbitrarily combined or exchanged in order, the optional implementations or optional examples can be arbitrarily combined.

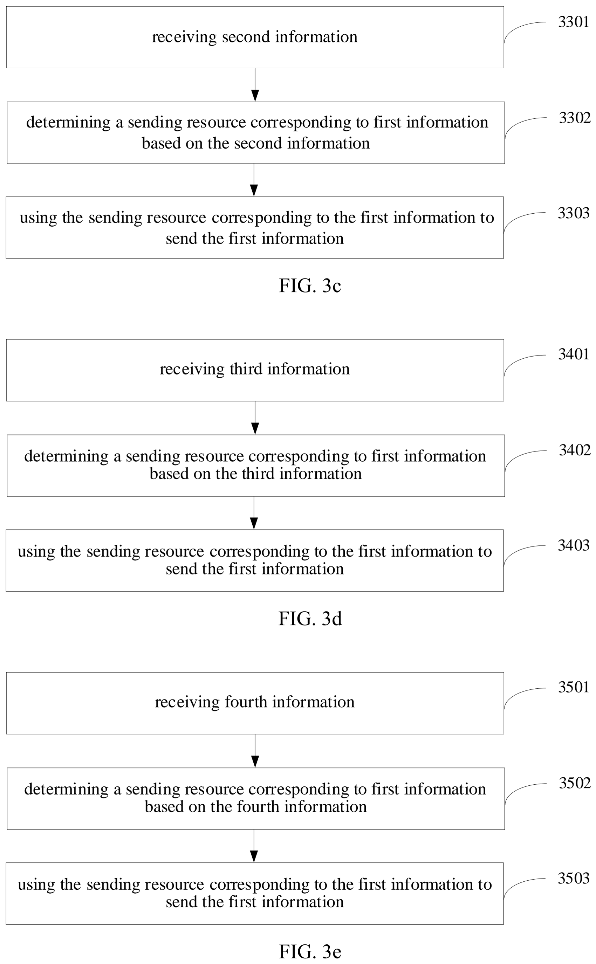

FIG. 3c is a flowchart of a resource determination method according to an embodiment of the present disclosure. As shown in FIG. 3c, embodiments of the present disclosure relate to a resource determination method used in a terminal 101, and the method includes the following steps.

At step 3301, second information is received.

Alternatively, the terminal may receive the second information sent by a network device.

At step 3302, a sending resource corresponding to first information is determined based on the second information.

Alternatively, the terminal may determine TOs for sending the first information from a first time window based on the second information, so as to determine the sending resource corresponding to the first information.

At step 3303, the sending resource corresponding to the first information is used to send the first information.

For detailed description of steps 3301-3303, reference may be made to the embodiments of FIG. 2a-FIG. 2h above.

The resource determination method involved in the embodiments of the present disclosure may include at least one of steps S3301 to S3303. For example, step S3301 may be implemented as an independent embodiment, step S3302 may be implemented as an independent embodiment, steps S3301+S3302 may be implemented as an independent embodiment, which is not limited herein.

In these implementations or embodiments, unless there is any contradiction, each step can be independent, arbitrarily combined or exchanged in order, the optional implementations or optional examples can be arbitrarily combined.

FIG. 3d is a flowchart of a resource determination method according to an embodiment of the present disclosure. As shown in FIG. 3d, embodiments of the present disclosure relate to a resource determination method used in a terminal 101, and the method includes the following steps.

At step 3401, third information is received.

Alternatively, the terminal may receive the third information sent by a network device.

At step 3402, a sending resource corresponding to first information is determined based on the third information.

Alternatively, the terminal may determine TOs for sending the first information from a first time window based on the third information, so as to determine the sending resource corresponding to the first information.

At step 3403, the sending resource corresponding to the first information is used to send the first information.

For detailed description of steps 3401-3403, reference may be made to the embodiments of FIG. 2a-FIG. 2h above.

The resource determination method involved in the embodiments of the present disclosure may include at least one of steps S3401 to S3403. For example, step S3401 may be implemented as an independent embodiment, step S3402 may be implemented as an independent embodiment, steps S3401+S3402 may be implemented as an independent embodiment, which is not limited herein.

In these implementations or embodiments, unless there is any contradiction, each step can be independent, arbitrarily combined or exchanged in order, the optional implementations or optional examples can be arbitrarily combined.

FIG. 3e is a flowchart of a resource determination method according to an embodiment of the present disclosure. As shown in FIG. 3e, embodiments of the present disclosure relate to a resource determination method used in a terminal 101, and the method includes the following steps.

At step 3501, fourth information is received.

Alternatively, the terminal may receive the fourth information sent by a network device. The fourth information may include a first offset and a total number of TOs for sending first information. For the detailed content, reference may be made to the embodiment of FIG. 2e1 above.

At step 3502, a sending resource corresponding to first information is determined based on the fourth information.

Alternatively, the method for the terminal to determine the sending resource corresponding to the first information based on the fourth information may be described as follows: the terminal first determines the first one of the TOs for sending the first information in the first time window based on the first offset and a first TO in the first time window, and then determines the TOs for sending the first information from the first time window based on the first one of the TOs for sending the first information and the total number of the TOs for sending the first information, so as to determine the sending resource corresponding to the first information.

At step 3503, the sending resource corresponding to the first information is used to send the first information.

For detailed description of steps 3501-3503, reference may be made to the embodiments of FIG. 2a-FIG. 2h above.

The resource determination method involved in the embodiments of the present disclosure may include at least one of steps S3501 to S3503. For example, step S3501 may be implemented as an independent embodiment, step S3502 may be implemented as an independent embodiment, steps S3501+S3502 may be implemented as an independent embodiment, which is not limited herein.

In these implementations or embodiments, unless there is any contradiction, each step can be independent, arbitrarily combined or exchanged in order, the optional implementations or optional examples can be arbitrarily combined.

FIG. 3f is a flowchart of a resource determination method according to an embodiment of the present disclosure. As shown in FIG. 3f, embodiments of the present disclosure relate to a resource determination method used in a terminal 101, and the method includes the following steps.

At step 3601, fifth information is received.

Alternatively, the terminal may receive the fifth information sent by a network device.

At step 3602, a sending resource corresponding to first information is determined based on the fifth information.

Alternatively, the terminal may determine TOs for sending the first information from a first time window based on the fifth information, so as to determine the sending resource corresponding to the first information.

At step 3603, the sending resource corresponding to the first information is used to send the first information.

For detailed description of steps 3601-3603, reference may be made to the embodiments of FIG. 2a-FIG. 2h above.

The resource determination method involved in the embodiments of the present disclosure may include at least one of steps S3601 to S3603. For example, step S3601 may be implemented as an independent embodiment, step S3602 may be implemented as an independent embodiment, steps S3601+S3602 may be implemented as an independent embodiment, which is not limited herein.

In these implementations or embodiments, unless there is any contradiction, each step can be independent, arbitrarily combined or exchanged in order, the optional implementations or optional examples can be arbitrarily combined.

FIG. 3g is a flowchart of a resource determination method according to an embodiment of the present disclosure. As shown in FIG. 3g, embodiments of the present disclosure relate to a resource determination method used in a terminal 101, and the method includes the following steps.

At step 3701, a sending resource corresponding to first information is received.

Alternatively, the terminal may receive the sending resource corresponding to the first information configured by a network device.

In some implementations, the optional implementation of step 3701 may include any one or several of the methods in the above-mentioned embodiments of FIG. 3a to FIG. 3f.

For detailed description of step 3701, reference may be made to the embodiments of FIG. 2a-FIG. 2h and FIG. 3a-FIG. 3f above.

In these implementations or embodiments, unless there is any contradiction, each step can be independent, arbitrarily combined or exchanged in order, the optional implementations or optional examples can be arbitrarily combined.

FIG. 3h is a flowchart of a resource determination method according to an embodiment of the present disclosure. As shown in FIG. 3h, embodiments of the present disclosure relate to a resource determination method used in a terminal 101, and the method includes the following steps.

At step 3801, a sending resource corresponding to first information is determined based on a predefined protocol.

For detailed description of step 3801, reference may be made to the embodiment of FIG. 2g above.

In these implementations or embodiments, unless there is any contradiction, each step can be independent, arbitrarily combined or exchanged in order, the optional implementations or optional examples can be arbitrarily combined.

FIG. 3i is a flowchart of a resource determination method according to an embodiment of the present disclosure. As shown in FIG. 3i, embodiments of the present disclosure relate to a resource determination method used in a terminal 101, and the method includes the following steps.

At step 3901, a sending resource corresponding to first information is determined autonomously by default.

For detailed description of step 3901, reference may be made to the embodiment of FIG. 2h above.

At step 3902, the sending resource corresponding to the first information is reported.

Alternatively, the terminal may report the sending resource corresponding to the first information to the network device.

The resource determination method involved in the embodiments of the present disclosure may include at least one of steps S3901 to S3902. For example, step S3901 may be implemented as an independent embodiment, step S3902 may be implemented as an independent embodiment, which is not limited herein.

In these implementations or embodiments, unless there is any contradiction, each step can be independent, arbitrarily combined or exchanged in order, the optional implementations or optional examples can be arbitrarily combined.

FIG. 3j is a flowchart of a resource determination method according to an embodiment of the present disclosure. As shown in FIG. 3j, embodiments of the present disclosure relate to a resource determination method used in a terminal 101, and the method includes the following steps.

At step 31001, a sending resource corresponding to first information is determined.

In some embodiments, the first information indicates a usage state of the terminal for a TO.

In some embodiments, determining the sending resource corresponding to the first information includes at least one of:

determining the sending resource corresponding to the first information based on a configuration of a network device;
determining the sending resource corresponding to the first information based on a predefined protocol; or
autonomously determining by default, by the terminal, the sending resource corresponding to the first information.

In some embodiments, the first information indicates the usage state of the terminal for one or more TOs in a first time window, and the first time window is a time window where TOs whose usage states can be indicated by the first information are located.

In some embodiments, the first information indicates the usage state of the terminal for one or more TOs in a first time window, and the first time window is a time window where all TOs whose usage states can be indicated by the first information are located.

In some embodiments, determining the sending resource corresponding to the first information based on the configuration of the network device includes:

receiving one or more first indexes sent by the network device, in which the first index is an index corresponding to a TO in a first time window; and
determining one or more TOs corresponding respectively to the one or more first indexes as the sending resource corresponding to the first information.

In the above embodiment, the network device configures the sending resource corresponding to the first information for the terminal by sending the one or more first indexes corresponding to one or more TOs to the terminal, then a specific method of how the network device configures the sending resource corresponding to the first information for the terminal is proposed, which may ensure that the terminal can successfully determine the sending resource for sending the first information, ensure that the first information can be successfully sent, and achieve successful indication of the usage state for the TO. Therefore, the network device can successfully know the usage state of the terminal for the TO, and can schedule the TO not used by the terminal to be reused for uplink transmissions of other terminals, thus avoiding idle resources and ensuring uplink transmission efficiency.

In some embodiments, determining the sending resource corresponding to the first information based on the configuration of the network device includes:

receiving one or more second indexes sent by the network device, in which the second index is an index corresponding to a configured grant (CG) period in a first time window; and
determining TOs in one or more CG periods corresponding respectively to the one or more second indexes as the sending resource corresponding to the first information.

In some embodiments, determining the sending resource corresponding to the first information based on the configuration of the network device includes:

receiving second information sent by the network device, in which the second information includes a bitmap, each bit in the bitmap corresponds to one TO in a first time window, and a bit value carried by a bit in the bitmap indicates whether to use a TO corresponding to the bit to send the first information; and
determining the sending resource corresponding to the first information based on the second information.

In some embodiments, determining the sending resource corresponding to the first information based on the configuration of the network device includes:

receiving second information sent by the network device, in which the second information includes a bitmap, the number of bits in the bitmap is less than or equal to a total number of TOs in a first time window, each bit in the bitmap corresponds to one TO in a first time window, and a bit value carried by a bit in the bitmap indicates whether to use a TO corresponding to the bit to send the first information; and
determining the sending resource corresponding to the first information based on the second information.

In some embodiments, determining the sending resource corresponding to the first information based on the configuration of the network device includes:

receiving third information sent by the network device, in which the third information is used to configure a total number of TOs for sending the first information; and
determining the TOs for sending the first information from a first time window based on the third information.

In some embodiments, determining the sending resource corresponding to the first information based on the configuration of the network device includes:

receiving fourth information sent by the network device, in which the fourth information includes a first offset and a total number of TOs for sending the first information;
determining the first one of the TOs for sending the first information in a first time window based on the first offset and a first TO in the first time window; and
determining the TOs for sending the first information from the first time window based on the first one of the TOs for sending the first information and the total number.

In some embodiments, determining the sending resource corresponding to the first information based on the configuration of the network device includes:

receiving fourth information sent by the network device, in which the fourth information includes a first offset and a total number of TOs for sending the first information;
determining the first one of the TOs for sending the first information in a first time window based on the first offset and a first TO in the first time window, in which the first TO is any TO other than the last one of the TOs in the first time window; and
determining the TOs for sending the first information from the first time window based on the first one of the TOs for sending the first information and the total number.

In some embodiments, determining the sending resource corresponding to the first information based on the configuration of the network device includes:

receiving fifth information sent by the network device, in which the fifth information includes a third index and a total number of TOs for sending the first information, the third index is an index corresponding to the first one of the TOs for sending the first information in a first time window; and
determining the TOs for sending the first information from the first time window based on the fifth information.

In some embodiments, determining the sending resource corresponding to the first information based on the predefined protocol includes at least one of:

determining the first one of TOs in a first time window as the sending resource corresponding to the first information;

determining the first and $\left\lfloor \dfrac{n}{2} \right\rfloor$-th ones of TOs in a first time window as the sending resource corresponding to the first information, where n is a total number of the TOs in the first time window, and $\lfloor . \rfloor$ is a round-down function;

determining the first and $\left\lceil \dfrac{n}{2} \right\rceil$-th ones of TOs in a first time window as the sending resource corresponding to the first information, where n is a total number of the TOs in the first time window, and $\lceil . \rceil$ is a round-up function;

determining all TOs in a first time window as the sending resource corresponding to the first information;

determining first $\left\lfloor \dfrac{n}{2} \right\rfloor$ ones of TOs in a first time window as the sending resource corresponding to the first information, where n is a total number of the TOs in the first time window, and $\lfloor . \rfloor$ is a round-down function;

determining first $\dfrac{n}{2}$ ones of TOs in a first time window as the sending resource corresponding to the first information, where n is a total number of the TOs in the first time window; or

determining first $\left\lceil \dfrac{n}{2} \right\rceil$ ones of TOs in a first time window as the sending resource corresponding to the first information, where n is a total number of the TOs in the first time window, and $\lceil . \rceil$ is a round-up function.

In some embodiments, autonomously determining by default, by the terminal, the sending resource corresponding to the first information includes at least one of:

determining the first one of TOs in a first time window as the sending resource corresponding to the first information;

determining the first and $\left\lfloor \dfrac{n}{2} \right\rfloor$-th ones of TOs in a first time window as the sending resource corresponding to the first information, where n is a total number of the TOs in the first time window, and $\lfloor . \rfloor$ is a round-down function;

determining the first and $\left\lceil \dfrac{n}{2} \right\rceil$-th ones of TOs in a first time window as the sending resource corresponding to the first information, where n is a total number of the TOs in the first time window, and $\lceil . \rceil$ is a round-up function;

determining all TOs in a first time window as the sending resource corresponding to the first information;

determining first $\left\lfloor \dfrac{n}{2} \right\rfloor$ ones of TOs in a first time window as the sending resource corresponding to the first information, where n is a total number of the TOs in the first time window, and $\lfloor . \rfloor$ is a round-down function;

determining first $\dfrac{n}{2}$ ones of TOs in a first time window as the sending resource corresponding to the first information, where n is a total number of the TOs in the first time window; or

determining first $\left\lceil \dfrac{n}{2} \right\rceil$ ones of TOs in a first time window as the sending resource corresponding to the first information, where n is a total number of the TOs in the first time window, and $\lceil \cdot \rceil$ is a round-up function.

In some embodiments, the first time window includes:

one CG period; or
a plurality of CG periods that overlap in a time domain; or
a plurality of CG periods that do not overlap in a time domain; or
one or more TOs; or
one or more radio frames; or
one or more radio half-frames; or
one or more time domain symbols; or
one or more time slots.

In an optional embodiment, for the optional implementation of step 31001, reference may be made to the above-mentioned steps S2102, S2202, S2302, S2402, S2502, S2601, S2701, S2801, steps in any one or more embodiments in the embodiments of FIG. 3a to FIG. 3i, and other related parts in the embodiments involved in FIG. 2a to FIG. 2h and FIG. 3a to FIG. 3i, which is not elaborated here.

In these implementations or embodiments, unless there is any contradiction, each step can be independent, arbitrarily combined or exchanged in order, the optional implementations or optional examples can be arbitrarily combined.

In some embodiments of the present disclosure, the embodiments of the present disclosure relate to a resource determination method used in a terminal 101, and the method includes the following steps.

At step 31101, at least one of one or more first indexes, one or more second indexes, second information, third information, fourth information, or fifth information is determined.

Alternatively, in some embodiments, the terminal may obtain at least one of the one or more first indexes, the one or more second indexes, the second information, the third information, the fourth information, or the fifth information based on transmission of the network device, or based on a predefined protocol, or autonomous determination of the terminal.

At step 31102, a sending resource corresponding to first information is determined based on at least one of the one or more first indexes, the one or more second indexes, the second information, the third information, the fourth information, or the fifth information.

At step 31103, the terminal determines the sending resource corresponding to the first information based on the predefined protocol.

At step 31104, the terminal autonomously determines the sending resource corresponding to the first information by default.

In some embodiments, any one of the above steps 31102, 31103, and 31104 may be executed, for example, step 31102, step 31103, or step 31104 may be executed; in other embodiments, any two of the above steps 31102, 31103, and 31104 may be executed, for example, step 31102 and step 31103 may be executed, or step 31102 and step 31104 may be executed; in yet other embodiments, all of the above steps 31102, 31103, and 31104 may be executed.

In some embodiments, there is no limitation on the execution order among the above steps 31102, 31103 and 31104. Steps 31102, 31103 and 31104 may be executed simultaneously, or steps 31102, 31103 and 31104 may be executed in sequence, or steps 31103, 31104 and 31102 may be executed in sequence, which are not limited herein.

At step 31105, the sending resource corresponding to the first information is used to send the first information to the network device.

For detailed description of steps 31101-31105, reference may be made to the above embodiments of FIG. 2a-FIG. 2h, steps in any one or more embodiments in the embodiments of FIG. 3a to FIG. 31, and other related parts in the embodiments involved in FIG. 2a to 2h and FIG. 3a to 3i.

In these implementations or embodiments, unless there is any contradiction, each step can be independent, arbitrarily combined or exchanged in order, the optional implementations or optional examples can be arbitrarily combined.

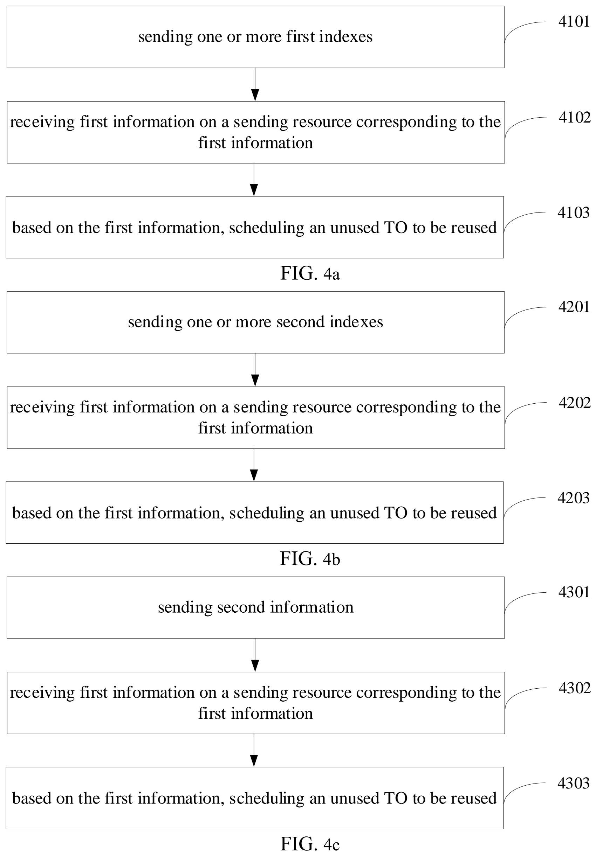

FIG. 4a is a flowchart of a resource determination method according to an embodiment of the present disclosure. As shown in FIG. 4a, embodiments of the present disclosure relate to a resource determination method used in a network device 102, and the method includes the following steps.

At step 4101, one or more first indexes are sent.

Alternatively, the network device may send one or more first indexes to a terminal.

At step 4102, first information is received on a sending resource corresponding to the first information.

At step 4103, based on the first information, an unused TO is scheduled to be reused.

For detailed description of steps 4101-4103, reference may be made to the embodiment of FIG. 2a above.

The resource determination method involved in the embodiments of the present disclosure may include at least one of steps S4101 to S4103. For example, step S4101 may be implemented as an independent embodiment, step S4102 may be implemented as an independent embodiment, steps S4101+S4102 may be implemented as an independent embodiment, which is not limited herein.

In these implementations or embodiments, unless there is any contradiction, each step can be independent, arbitrarily combined or exchanged in order, the optional implementations or optional examples can be arbitrarily combined.

FIG. 4b is a flowchart of a resource determination method according to an embodiment of the present disclosure. As shown in FIG. 4b, embodiments of the present disclosure relate to a resource determination method used in a network device 102, and the method includes the following steps.

At step 4201, one or more second indexes are sent.

Alternatively, the network device may send one or more second indexes to a terminal.

At step 4202, first information is received on a sending resource corresponding to the first information.

At step 4203, based on the first information, an unused TO is scheduled to be reused.

For detailed description of steps 4201-4203, reference may be made to the embodiment of FIG. 2b above.

The resource determination method involved in the embodiments of the present disclosure may include at least one of steps S4201 to S4203. For example, step S4201 may be implemented as an independent embodiment, step S4202 may be implemented as an independent embodiment, steps S4201+S4202 may be implemented as an independent embodiment, which is not limited herein.

In these implementations or embodiments, unless there is any contradiction, each step can be independent, arbitrarily combined or exchanged in order, the optional implementations or optional examples can be arbitrarily combined.

FIG. 4c is a flowchart of a resource determination method according to an embodiment of the present disclosure. As shown in FIG. 4c, embodiments of the present disclosure relate to a resource determination method used in a network device 102, and the method includes the following steps.

At step 4301, second information is sent.

Alternatively, the network device may send the second information to a terminal.

At step 4302, first information is received on a sending resource corresponding to the first information.

At step 4303, based on the first information, an unused TO is scheduled to be reused.

For detailed description of steps 4301-4303, reference may be made to the embodiment of FIG. 2c above.

The resource determination method involved in the embodiments of the present disclosure may include at least one of steps S4301 to S4303. For example, step S4301 may be implemented as an independent embodiment, step S4302 may be implemented as an independent embodiment, steps S4301+S4302 may be implemented as an independent embodiment, which is not limited herein.

In these implementations or embodiments, unless there is any contradiction, each step can be independent, arbitrarily combined or exchanged in order, the optional implementations or optional examples can be arbitrarily combined.

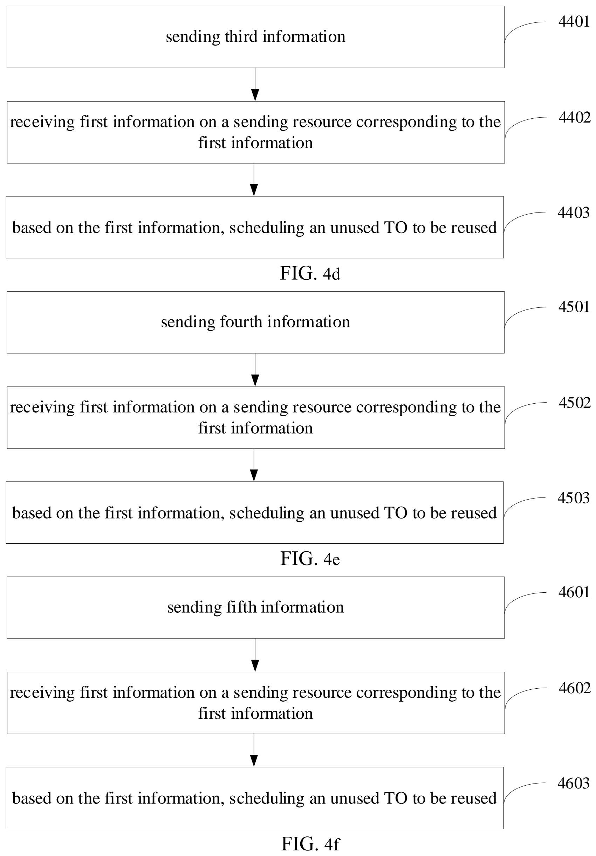

FIG. 4d is a flowchart of a resource determination method according to an embodiment of the present disclosure. As shown in FIG. 4d, embodiments of the present disclosure relate to a resource determination method used in a network device 102, and the method includes the following steps.

At step 4401, third information is sent.

Alternatively, the network device may send the third information to a terminal.

At step 4402, first information is received on a sending resource corresponding to the first information.

At step 4403, based on the first information, an unused TO is scheduled to be reused.

For detailed description of steps 4401-4403, reference may be made to the embodiment of FIG. 2d above.

The resource determination method involved in the embodiments of the present disclosure may include at least one of steps S4401 to S4403. For example, step S4401 may be implemented as an independent embodiment, step S4402 may be implemented as an independent embodiment, steps S4401+S4402 may be implemented as an independent embodiment, which is not limited herein.

In these implementations or embodiments, unless there is any contradiction, each step can be independent, arbitrarily combined or exchanged in order, the optional implementations or optional examples can be arbitrarily combined.

FIG. 4e is a flowchart of a resource determination method according to an embodiment of the present disclosure. As shown in FIG. 4e, embodiments of the present disclosure relate to a resource determination method used in a network device 102, and the method includes the following steps.

At step 4501, fourth information is sent.

Alternatively, the network device may send the fourth information to a terminal.

At step 4502, first information is received on a sending resource corresponding to the first information.

At step 4503, based on the first information, an unused TO is scheduled to be reused.

For detailed description of steps 4501-4503, reference may be made to the embodiment of FIG. 2e above.

The resource determination method involved in the embodiments of the present disclosure may include at least one of steps S4501 to S4503. For example, step S4501 may be implemented as an independent embodiment, step S4502 may be implemented as an independent embodiment, steps S4501+S4502 may be implemented as an independent embodiment, which is not limited herein.

In these implementations or embodiments, unless there is any contradiction, each step can be independent, arbitrarily combined or exchanged in order, the optional implementations or optional examples can be arbitrarily combined.

FIG. 4f is a flowchart of a resource determination method according to an embodiment of the present disclosure. As shown in FIG. 4f, embodiments of the present disclosure relate to a resource determination method used in a network device 102, and the method includes the following steps.

At step 4601, fifth information is sent.

Alternatively, the network device may send the fifth information to a terminal.

At step 4602, first information is received on a sending resource corresponding to the first information.

At step 4603, based on the first information, an unused TO is scheduled to be reused.

For detailed description of steps 4601-4603, reference may be made to the embodiment of FIG. 2f above.

The resource determination method involved in the embodiments of the present disclosure may include at least one of steps S4601 to S4603. For example, step S4601 may be implemented as an independent embodiment, step S4602 may be implemented as an independent embodiment, steps S4601+S4602 may be implemented as an independent embodiment, which is not limited herein.

In these implementations or embodiments, unless there is any contradiction, each step can be independent, arbitrarily combined or exchanged in order, the optional implementations or optional examples can be arbitrarily combined.

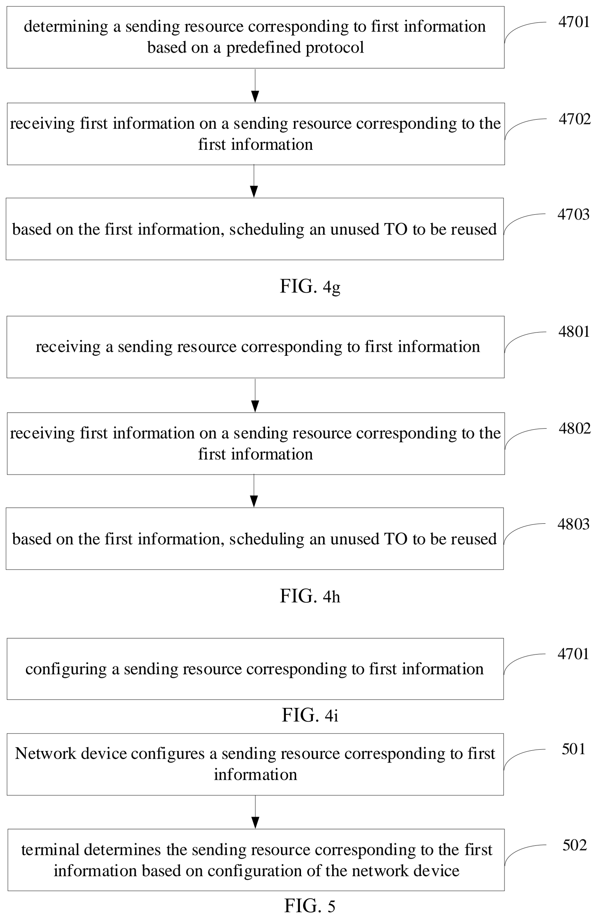

FIG. 4g is a flowchart of a resource determination method according to an embodiment of the present disclosure. As shown in FIG. 4g, embodiments of the present disclosure relates to a resource determination method used in a network device 102, and the method includes the following steps.

At step 4701, a sending resource corresponding to first information is determined based on a predefined protocol.

At step 4702, the first information is received on the sending resource corresponding to the first information.

At step 4703, based on the first information, an unused TO is scheduled to be reused.

For detailed description of steps 4701-4703, reference may be made to the embodiment of FIG. 2i above.

The resource determination method involved in the embodiments of the present disclosure may include at least one of steps S4701 to S4703. For example, step S4701 may be implemented as an independent embodiment, step S4702 may be implemented as an independent embodiment, steps S4701+S4702 may be implemented as an independent embodiment, which is not limited herein.

In these implementations or embodiments, unless there is any contradiction, each step can be independent, arbitrarily combined or exchanged in order, the optional implementations or optional examples can be arbitrarily combined.

FIG. 4h is a flowchart of a resource determination method according to an embodiment of the present disclosure. As shown in FIG. 4h, embodiments of the present disclosure relate to a resource determination method used in a network device 102, and the method includes the following steps.

At step 4801, a sending resource corresponding to first information is received.

Alternatively, the network device may receive the sending resource corresponding to the first information reported by a terminal.

At step 4802, the first information is received on the sending resource corresponding to the first information.

At step 4803, based on the first information, an unused TO is scheduled to be reused.

For detailed description of steps 4801-4803, reference may be made to the embodiment of FIG. 2j above.

The resource determination method involved in the embodiments of the present disclosure may include at least one of steps S4801 to S4803. For example, step S4801 may be implemented as an independent embodiment, step S4802 may be implemented as an independent embodiment, steps S4801+S4802 may be implemented as an independent embodiment, which is not limited herein.

In the implementations or embodiments, unless there is any contradiction, each step can be independent, arbitrarily combined or exchanged in order, the optional implementations or optional examples can be arbitrarily combined.

FIG. 4i is a flowchart of a resource determination method according to an embodiment of the present disclosure. As shown in FIG. 4i, embodiments of the present disclosure relate to a resource determination method used in a network device 102, and the method includes the following steps.

At step 4901, a sending resource corresponding to first information is configured.

In some embodiments, the network device may configure the sending resource corresponding to the first information for a terminal.

In some embodiments, the first information indicates a usage state of the terminal for a TO.

In some embodiments, the first information indicates the usage state of the terminal for one or more TOs in a first time window, and the first time window is a time window where TOs whose usage states can be indicated by the first information are located.

In some embodiments, the first information indicates the usage state of the terminal for one or more TOs in a first time window, and the first time window is a time window where all TOs whose usage states can be indicated by the first information are located.

In some embodiments, configuring the sending resource corresponding to the first information for the terminal includes:

sending one or more first indexes to the terminal, in which the one or more first indexes correspond respectively to one or more TOs for sending the first information in a first time window.

In some embodiments, configuring the sending resource corresponding to the first information for the terminal includes:

sending one or more second indexes to the terminal, in which the one or more second indexes correspond respectively to one or more configured grant (CG) periods where TOs for sending the first information in a first time window are located.

In some embodiments, configuring the sending resource corresponding to the first information for the terminal includes:

sending second information to the terminal, in which the second information includes a bitmap, each bit in the bitmap corresponds to one TO in a first time window, and a bit value carried by a bit in the bitmap indicates whether to use a TO corresponding to the bit to send the first information.

**In** some embodiments, configuring the sending resource corresponding to the first information for the terminal includes:

sending second information to the terminal, in which the second information includes a bitmap, the number of bits in the bitmap is less than or equal to a total number of TOs in a first time window, each bit in the bitmap corresponds to one TO in a first time window, and a bit value carried by a bit in the bitmap indicates whether to use a TO corresponding to the bit to send the first information.

In combination with some embodiments of the second aspect, in some embodiments, configuring the sending resource corresponding to the first information for the terminal includes:

sending third information to the terminal, in which the third information is used to configure a total number of TOs for sending the first information.

In combination with some embodiments of the second aspect, in some embodiments, configuring the sending resource corresponding to the first information for the terminal includes:

sending fourth information to the terminal, in which the fourth information includes a first offset and a total number of TOs for sending the first information.

In combination with some embodiments of the second aspect, in some embodiments, configuring the sending resource corresponding to the first information for the terminal includes:

sending fifth information to the terminal, in which the fifth information includes a third index and a total number of TOs for sending the first information, the third index is an index corresponding to the first one of the TOs for sending the first information in a first time window.

In some embodiments, the first time window includes:

> one CG period; or
> a plurality of CG periods that overlap in a time domain; or
> a plurality of CG periods that do not overlap in a time domain; or
> one or more TOs; or
> one or more radio frames; or
> one or more radio half-frames; or
> one or more time domain symbols; or
> one or more time slots.

In some embodiments, for the optional implementation of step 3901, reference may be made to the above-mentioned steps S2101, S2201, S2301, S2401, S2501, S2601, steps in any one or more embodiments in the embodiments of FIG. 4a to FIG. 4h, and other related parts in the embodiments involved in FIG. 2a to FIG. 2h and FIG. 4a to FIG. 4h, which is not elaborated here.

In these implementations or embodiments, unless there is any contradiction, each step can be independent, arbitrarily combined or exchanged in order, the optional implementations or optional examples can be arbitrarily combined.

In some embodiments of the present disclosure, the embodiments of the present disclosure relate to a resource determination method used in a network device 102, and the method includes the following steps.

At step 41001, at least one of one or more first indexes, one or more second indexes, second information, third information, fourth information, or fifth information is sent.

At step 41002, first information is received on a sending resource corresponding to the first information.

At step 41003, based on the first information, an unused TO is scheduled to be reused.

For detailed description of steps 41001-41003, reference may be made to the above embodiments of FIG. 2a to FIG. 2h, and other related parts in the embodiments involved in FIG. 4a to FIG. 4h.

In these implementations or embodiments, unless there is any contradiction, each step can be independent, arbitrarily combined or exchanged in order, the optional implementations or optional examples can be arbitrarily combined.

FIG. 5 is a flowchart of a resource determination method according to an embodiment of the present disclosure. As shown in FIG. 5, embodiments of the present disclosure relate to a resource determination method used in a communication system, and the method includes the following steps.

At step 5101, a network device configures a sending resource corresponding to first information for a terminal.

At step 5201, the terminal determines the sending resource corresponding to the first information based on configuration of the network device.

For the optional implementation of step 5101, reference may be made to the above-mentioned step 3901, including steps S2101, S2201, S2301, S2401, S2501, S2601, steps in any one or more embodiments in the embodiments of FIG. 4a to FIG. 4f, and other related parts in the embodiments involved in FIG. 2a to FIG. 2h and FIG. 4a to FIG. 4f, which is not elaborated here.

For the optional implementation of step 5102, reference may be made to the above-mentioned steps S2102, S2202, S2302, S2402, S2502, S2601, S2701, step S2801, steps in any one or more embodiments in the embodiments of FIG. 3a to FIG. 3i, and other related parts in the embodiments involved in FIG. 2a to FIG. 2h and FIG. 3a to FIG. 3i, which is not elaborated here.

In some embodiments, the above method may include the methods described in the above embodiments of the communication system side, terminal side, network device side, etc., which will not be repeated here.

In these implementations or embodiments, unless there is any contradiction, each step can be independent, arbitrarily combined or exchanged in order, the optional implementations or optional examples can be arbitrarily combined, and can be arbitrarily combined with any steps of other implementations or other examples.

The following is an example introduction to the above method.

Example 1

In an implementation, the base station configures at least one set of CG resources for the terminal on one BWP through an RRC signaling. The terminal may perform uplink transmission on a TO in all CG configurations by itself within the CG period configured by the base station. In another implementation, the base station configures partial information of at least one set of CG configurations for the terminal on one BWP through the RRC signaling, and the base station notifies the terminal of the remaining information of the CG configuration through dynamic signaling DCI. After the base station activates the CG configuration through the dynamic signaling DCI, the terminal may perform uplink transmission on the TO in the CG configuration by itself within the CG period configured by the base station. (As the basic background of the specification).

The terminal performs uplink transmission in a valid TO and notifies the base station of the usage state of the TO through dynamic indication information, and the notification way is based on UCI. There are two usage states, one is "unused" and the other is "used". The terminal may not use the TO in the "unused" state, or the terminal may not use the TO in the "unused" state before the dynamic indication information is updated. The terminal may not use the TO in the "used" state. The UCI is new UCI or CG-UCI, carried by the CG PUSCH, and sent in any one or several TOs.

Based on the above, the UCI is sent on a first wireless resource, and the first wireless resource may be one or more TOs, one or more CG configurations/CG periods, and a period of time. The method of determining the first wireless resource includes at least one of the following.

Option solution 1: RRC signaling configuration, one or several TOs

In an embodiment, the base station configures one or more TOs for sending a first message for the terminal through the RRC signaling. The first message is dynamic indication information used to indicate the usage state of the TO. The configuration of the RRC signaling is necessary or optional. When the base station does not configure the RRC signaling, the terminal selects a default configuration, where the default configuration may be one TO or multiple TOs.

Optional method 1: RRC signaling in the form of TO index

RRC signaling TOwithUCI is used to indicate the TO for sending the first message. The signaling is configured as {TO0, TO1, TO2, TO3}, and the number of TO indexes contained therein is the maximum number of TOs in the first time period, or the maximum number of TOs minus 1. TO0 represents the first one of TOs in the first time period, TO1 represents the second one of the TOs in the first time period, TO2 represents the third one of the TOs in the first time period, and TO3 represents the fourth one of the TOs in the first time period. The first time period is a CG period, multiple CG periods, multiple time domain symbols, multiple time slots, multiple continuous TOs, a time window corresponding to the first message, etc. When TOwithUCI is configured as {TO1}, it means that the terminal needs to send the first message on the second one of the TOs in the first time period. Alternatively, when TOwithUCI is configured as {TO1, TO3}, it means that the terminal needs to send the first message on the second one and the fourth one of the TOs in the first time period.

Further, when the base station does not configure TOwithUCI for the terminal, the terminal sends the first message within the first one of the TOs in the first time period by default. Alternatively, when the base station does not configure TOwithUCI for the terminal, the terminal sends the first message within the first and $\left\lfloor\frac{n}{2}\right\rfloor$ -th ones of the TOs in the first time period by default, where n is the number of the TOs in the first time period. Alternatively, when the base station does not configure TOwithUCI for the terminal, the terminal sends the first message within all TOs in the first time period by default. Alternatively, when the base station does not configure TOwithUCI for the terminal, the terminal sends the first message within first $\left\lfloor\frac{n}{2}\right\rfloor$ ones or first $\left\lceil\frac{n}{2}\right\rceil$ ones of the TOs in the first time period by default, where n is the number of the TOs in the first time period. Alternatively, when the base station does not configure TOwithUCI for the terminal, the terminal sends the first message within all TOs in the first time period by default.

Optional method 2: bitmap

RRC signaling TOwithUCI is used to indicate the TO for sending the first message. The signaling consists of a 4-bit bitmap, and the size of the bitmap is the maximum number of TOs in the first time period, or the maximum number of TOs minus 1. The first one of bits in the bitmap represents the first one of the TOs in the first time period, the second one of bits in the bitmap represents the second one of the TOs in the first time period, the third one of bits in the bitmap represents the third one of the TOs in the first time period, and the fourth one of bits in the bitmap represents the fourth one of the TOs in the first time period. The first time period is one CG period, multiple CG periods, multiple time domain symbols, multiple time slots, multiple continuous TOs, a time window corresponding to the first message, etc. When TOwithUCI is configured as {0100}, it means that the terminal needs to send the first message within the second one of the TOs in the first time period. Or, when TOwithUCI is configured as {0101}, it means that the terminal needs to send the first message within the second and fourth ones of the TOs in the first time period.

Further, when the base station does not configure TOwithUCI for the terminal, the terminal sends the first message within the first one of the TOs in the first time period by default. Alternatively, when the base station does not configure TOwithUCI for the terminal, the terminal sends the first message within the first and $\left\lfloor\frac{n}{2}\right\rfloor$ -th ones of the TOs in the first time period by default, where n is the number of the TOs in the first time period. Alternatively, when the base station does not configure TOwithUCI for the terminal, the terminal sends the first message within all TOs in the first time period by default. Alternatively, when the base station does not configure TOwithUCI for the terminal, the terminal sends the first message within first $\left\lfloor\frac{n}{2}\right\rfloor$ ones or first $\left\lceil\frac{n}{2}\right\rceil$ ones of the TOs in the first time period by default, where n is the number of the TOs in the first time period. Alternatively, when the base station does not configure TOwithUCI for the terminal, the terminal sends the first message within all TOs in the first time period by default. (Same as method 1).

Optional method 3: the number of TOs

RRC signaling NumOfTOwithUCI is used to indicate the number of TOs for sending the first message, and the signaling may be optionally configured as {n1, n2, n4, n8}. n1 represents the first one of the TOs in the first time period, n2 represents first two ones of the TOs in the first time period, n4 represents first four ones of the TOs in the first time period, and n8 represents first eight ones of the TOs in the first time period. The first time period is one CG period, multiple CG periods, multiple time domain symbols, multiple time slots, multiple continuous TOs, a time window corresponding to the first message, etc. When NumOfTOwithUCI is configured as {n1}, it means that the terminal needs to send the first message within the first one of the TOs in the first time period. Alternatively, when NumOfTOwithUCI is configured as {n4}, it means that the terminal needs to send the first message within the 1st, 2nd, 3rd, and 4th ones of the TOs in the first time period.

Further, when the base station does not configure NumOfTOwithUCI for the terminal, the terminal sends the first message within the first one of the TOs in the first time period by default. Alternatively, when the base station does not configure NumOfTOwithUCI for the terminal, the terminal sends the first message within the first and $\left\lfloor\frac{n}{2}\right\rfloor$ -th ones of the TOs in the first time period by default, where n is the number of the TOs in the first time period. Alternatively, when the base station does not configure NumOfTOwithUCI for the terminal, the terminal sends the first message within all TOs in the first time period by default. Alternatively, when the base station does not configure NumOfTOwithUCI for the terminal, the terminal sends the first message within first $\left\lfloor\frac{n}{2}\right\rfloor$ ones or first $\left\lceil\frac{n}{2}\right\rceil$ ones of the TOs in the first time period by default, where n is the number of the TOs in the first time period. Alternatively, when the base station does not configure TOwithUCI for the terminal, the terminal sends the first message within all TOs in the first time period by default. (Same as method 1).

Optional method 4: Offset + the number of TOs

RRC signaling OffsetOfTOwithUCI, NumOfTOwithUCI is used to indicate the TO for sending the first message. OffsetOfTOwithUCI is used to indicate an offset value between a starting TO and the first one of Tos in the first time period, and the signaling is configured as {offset0, offset1, offset2}. NumOfTOwithUCI is used to indicate the number of TOs for sending the first message, and the signaling may be optionally configured as {n1, n2, n4, n8}. The first time period is one CG period, multiple CG periods, multiple time domain symbols, multiple time slots, multiple continuous TOs, a time window corresponding to the first message, etc. When the signaling is configured as {offset0, n4}, it means that the terminal needs to send the first message within the 1st, 2nd, 3rd, and 4th ones of the TOs in the first time period, as shown in FIG. 2e2 above. When the signaling is configured as {offset1, n4}, it means that the terminal needs to send the first message within the 2nd, 3rd, 4th, and 5th ones of the TOs in the first time period, as shown in FIG. 2e3 above.

Further, when the base station does not configure the RRC for the terminal, the terminal sends the first message within the first one of the TOs in the first time period by default. Alternatively, when the base station does not configure the RRC for the terminal, the terminal sends the first message within the first and $\left\lfloor \frac{n}{2} \right\rfloor$ -th ones of the TOs in the first time period by default, where n is the number of the TOs in the first time period. Alternatively, when the base station does not configure the RRC for the terminal, the terminal sends the first message within all TOs in the first time period by default. Alternatively, when the base station does not configure the RRC for the terminal, the terminal sends the first message within first $\left\lfloor \frac{n}{2} \right\rfloor$ ones or first $\left\lceil \frac{n}{2} \right\rceil$ ones of the TOs in the first time period by default, where n is the number of the TOs in the first time period. Alternatively, when the base station does not configure TOwithUCI for the terminal, the terminal sends the first message within all TOs in the first time period by default. (Same as method 1).

Optional method 5: TO index + the number of TOs

RRC signaling TOwithUCI, NumOfTOwithUCI is used to indicate the TO for sending the first message. TOwithUCI is used to indicate a starting TO, and the signaling is configured as {TO0, TO1, TO2, TO3}. NumOfTOwithUCI is used to indicate the number of TOs for sending the first message, and the signaling may be optionally configured as {n1, n2, n4, n8}. The first time period is one CG period, multiple CG periods, multiple time domain symbols, multiple time slots, multiple continuous TOs, a time window corresponding to the first message, etc. When the signaling is configured as {TO0, n4}, it means that the terminal needs to send the first message within the 1st, 2nd, 3rd, and 4th ones of the TOs in the first time period, as shown in FIG. 2f2 above. When the signaling is configured as {TO1, n4}, it means that the terminal needs to send the first message within the 2nd, 3rd, 4th, and 5th ones of the TOs in the first time period, as shown in FIG. 2f3 above.

Further, when the base station does not configure the RRC for the terminal, the terminal sends the first message within the first one of the TOs in the first time period by default. Alternatively, when the base station does not configure the RRC for the terminal, the terminal sends the first message within the first and $\left\lfloor \frac{n}{2} \right\rfloor$ -th ones of the TOs in the first time period by default, where n is the number of the TOs in the first time period. Alternatively, when the base station does not configure the RRC for the terminal, the terminal sends the first message within all TOs in the first time period by default. Alternatively, when the base station does not configure the RRC for the terminal, the terminal sends the first message within first $\left\lfloor \frac{n}{2} \right\rfloor$ ones or first $\left\lceil \frac{n}{2} \right\rceil$ ones of the TOs in the first time period by default, where n is the number of the TOs in the first time period. Alternatively, when the base station does not configure TOwithUCI for the terminal, the terminal sends the first message within all TOs in the first time period by default. (Same as method 1).

Option solution 2: predefined protocol, one or several TOs

In an embodiment, the base station and the terminal determine one or more TOs for the terminal to send the first message in a protocol predefinition manner. The first message is dynamic indication information used to indicate the usage state of the TO.

Method 1: the terminal sends the first message within the first one of the TOs in the first time period by default. The first time period is one CG period, multiple CG periods, multiple time domain symbols, multiple time slots, multiple consecutive TOs, a time window corresponding to the first message, etc.

Method 2: the terminal sends the first message within the first and $\left\lfloor \frac{n}{2} \right\rfloor$ -th ones of the TOs in the first time period by default, where n is the number of the TOs in the first time period. The first time period is one CG period, multiple CG periods, multiple time domain symbols, multiple time slots, multiple consecutive TOs, a time window corresponding to the first message, etc.

Method 3: the terminal sends the first message within all TOs in the first time period by default. The first time period is one CG period, multiple CG periods, multiple time domain symbols, multiple time slots, multiple consecutive TOs, a time window corresponding to the first message, etc.

Method 4: the terminal sends the first message within first $\left\lfloor \frac{n}{2} \right\rfloor$ ones or first $\left\lceil \frac{n}{2} \right\rceil$ ones of the TOs in the first time period by default, where n is the number of the TOs in the first time period. The first time period is one CG period, multiple CG periods, multiple time domain symbols, multiple time slots, multiple consecutive TOs, a time window corresponding to the first message, etc. For example, if n=7, the first 3 or 4 ones of the TOs are used for sending by default.

The embodiments of the present disclosure also propose an apparatus for implementing any of the above methods, for example, an apparatus is proposed, the above apparatus includes units or modules for implementing various steps performed by the terminal in any of the above methods. For another example, an apparatus is proposed, including units or modules for implementing various steps performed by a network device (such as an access network device, a core network function node, a core network device, etc.) in any of the above methods.

It should be understood that the division of the units or modules in the above apparatus is only a division of logical functions, and in an actual implementation, they may be fully or partially integrated into one physical entity, or they may be physically separated. In addition, the units or modules in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus can be implemented in the form of hardware circuits, and the functions of some or all of the units or modules can be realized by designing the hardware circuits. The above hardware circuits can be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit can be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses can be realized in the form of a processor calling software, or in the form of a hardware circuit, or in part by a processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

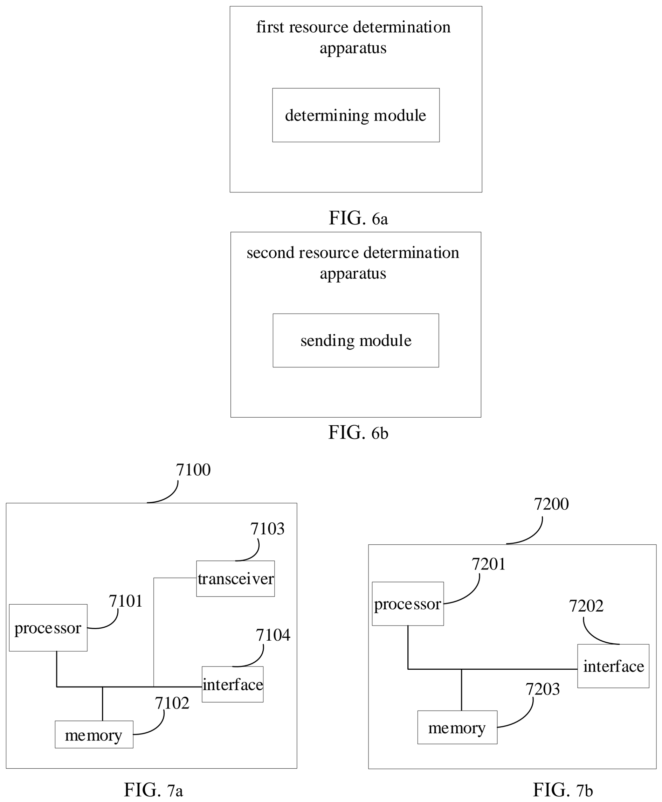

FIG. 6a is a schematic diagram of a first resource determination apparatus proposed in an embodiment of the present disclosure. As shown in FIG. 6a, the first resource determination apparatus includes: a determining module, configured to determine a sending resource corresponding to first information, in which the first information indicates a usage state of the terminal for a TO. Optionally, the above-mentioned determining module is used to execute the steps related to "determining the sending resource corresponding to the first information" performed by the terminal 101 in any of the above methods, which will not be repeated here. Optionally, the first resource determination apparatus also includes at least one of a sending module or a receiving module, and the above-mentioned sending module is used to execute the steps related to sending performed by the terminal 101 in any of the above methods, and the above-mentioned receiving module is used to execute the steps related to receiving performed by the terminal 101 in any of the above methods, which will not be repeated here.

FIG. 6b is a schematic diagram of a second resource determination apparatus proposed in an embodiment of the present disclosure. As shown in FIG. 6b, the second resource determination apparatus includes: a sending module, configured to configure a sending resource corresponding to first information for a terminal, in which the first information indicates a usage state of the terminal for a TO. Optionally, the above-mentioned sending module is used to execute the steps related to "configuring the sending resource corresponding to the first information for the terminal" performed by the network device 102 in any of the above methods, which will not be repeated here. Optionally, the second resource determination apparatus also includes at least one of a determining module or a receiving module, and the above-mentioned determining module is used to execute the steps related to determining performed by the network device 102 in any of the above methods, and the above-mentioned receiving module is used to execute the steps related to receiving performed by the network device 102 in any of the above methods, which will not be repeated here.

**FIG7.** a is a schematic diagram of a communication device 7100 proposed in an embodiment of the present disclosure. The communication device 7100 may be a network device (e.g., an access network device, a core network device, etc.), or a terminal (e.g., a user equipment, etc.), or a chip, a chip system, or a processor that supports a network device to implement any of the above methods, or a chip, a chip system, or a processor that supports a terminal to implement any of the above methods. The communication device 7100 may be used to implement the method described in the above method embodiments, and for details, reference may be made to the description in the above method embodiments.

As shown in FIG. 7a, the communication device 7100 includes one or more processors 7101. The processor 7101 may be a general-purpose processor or a dedicated processor, for example, a baseband processor or a central processing unit. The baseband processor may be used to process a communication protocol and communication data, and the central processing unit may be used to control the communication device (such as a base station, a baseband chip, a terminal, a terminal chip, a DU or a CU, etc.) to execute a program and process data of the program. The processor 7101 is used to call instructions so that the communication device 7100 executes any of the above methods.

In some embodiments, the communication device 7100 further includes one or more memories 7102 for storing instructions. Optionally, all or part of the memory 7102 may be outside the communication device 7100.

In some embodiments, the communication device 7100 further includes one or more transceivers 7103. When the communication device 7100 includes one or more transceivers 7103, the communication steps such as sending and receiving in the above methods are performed by the transceiver 7103, and the other steps are performed by the processor 7101.

In some embodiments, the transceiver may include a receiver and a transmitter, and the receiver and the transmitter may be separate or integrated. Optionally, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

Optionally, the communication device 7100 further includes one or more interface circuits 7104, which are connected to the memory 7102. The interface circuit 7104 may be used to receive signals from the memory 7102 or other apparatuses, and may be used to send signals to the memory 7102 or other apparatuses. For example, the interface circuit 7104 may read instructions stored in the memory 7102 and send the instructions to the processor 7101.

The communication device 7100 described in the above embodiments may be a network device or a terminal, but the scope of the communication device 7100 described in the present disclosure is not limited thereto, and the structure of the communication device 7100 may not be limited by FIG. 7a. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

FIG. 7b is a schematic diagram of a chip 7200 proposed in an embodiment of the present disclosure. In case where the communication device 7100 may be a chip or a chip system, reference may be made to the schematic diagram of the chip 7200 shown in FIG. 7b, but the present disclosure is not limited thereto.

The chip 7200 includes one or more processors 7201, and the processor 7201 is used to call instructions so that the chip 7200 executes any of the above methods.

In some embodiments, the chip 7200 further includes one or more interface circuits 7202, which are connected to the memory 7203. The interface circuit 7202 may be used to receive signals from the memory 7203 or other apparatuses, and the interface circuit 7202 may be used to send signals to the memory 7203 or other apparatuses. For example, the interface circuit 7202 may read instructions stored in the memory 7203 and send the instructions to the processor 7201. Optionally, the terms such as "interface circuit", "interface", "transceiver pin", and "transceiver" may be exchangeable with each other.

In some embodiments, the chip 7200 further includes one or more memories 7203 for storing instructions. Optionally, all or part of the memory 7203 may be outside the chip 7200.

The present disclosure also proposes a storage medium, on which instructions are stored, and when the instructions are executed on the communication device 7100, the communication device 7100 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it can also be a temporary storage medium.

The present disclosure also proposes a program product, which, when executed by the communication device 7100, enables the communication device 7100 to execute any of the above methods. Optionally, the program product is a computer program product.

The present disclosure also proposes a computer program, which, when executed on a computer, causes the computer to execute any one of the above methods.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, prestored, pre-negotiated, pre-configured, solidified or pre-fired.

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

**Claims**

1. A resource determination method, performed by a terminal, comprising:
   determining a sending resource corresponding to first information, wherein the first information indicates a usage state of the terminal for a transmission occasion (TO).

2. The method of claim 1, wherein determining the sending resource corresponding to the first information comprises at least one of:

   determining the sending resource corresponding to the first information based on a configuration of a network device;
   determining the sending resource corresponding to the first information based on a predefined protocol; or
   autonomously determining by default, by the terminal, the sending resource corresponding to the first information.

3. The method of claim 1 or 2, wherein the first information indicates the usage state of the terminal for one or more TOs in a first time window, and the first time window is a time window where all TOs whose usage states can be indicated by the first information are located.

4. The method of claim 2, wherein determining the sending resource corresponding to the first information based on the configuration of the network device comprises:

   receiving one or more first indexes sent by the network device, wherein the first index is an index corresponding to a TO in a first time window; and
   determining one or more TOs corresponding respectively to the one or more first indexes as the sending resource corresponding to the first information.

5. The method of any of claims 2-4, wherein determining the sending resource corresponding to the first information based on the configuration of the network device comprises:

   receiving one or more second indexes sent by the network device, wherein the second index is an index corresponding to a configured grant (CG) period in a first time window; and
   determining TOs in one or more CG periods corresponding respectively to the one or more second indexes as the sending resource corresponding to the first information.

6. The method of any of claims 2-5, wherein determining the sending resource corresponding to the first information based on the configuration of the network device comprises:

   receiving second information sent by the network device, wherein the second information comprises a bitmap, each bit in the bitmap corresponds to one TO in a first time window, and a bit value carried by a bit in the bitmap indicates whether to use a TO corresponding to the bit to send the first information; and
   determining the sending resource corresponding to the first information based on the second information.

7. The method of any of claims 2-6, wherein determining the sending resource corresponding to the first information based on the configuration of the network device comprises:

receiving third information sent by the network device, wherein the third information is used to configure a total number of TOs for sending the first information; and
determining the TOs for sending the first information from a first time window based on the third information.

8. The method of any of claims 2-7, wherein determining the sending resource corresponding to the first information based on the configuration of the network device comprises:

   receiving fourth information sent by the network device, wherein the fourth information comprises a first offset and a total number of TOs for sending the first information;
   determining the first one of the TOs for sending the first information in a first time window based on the first offset and a first TO in the first time window; and
   determining the TOs for sending the first information from the first time window based on the first one of the TOs for sending the first information and the total number.

9. The method of any of claims 2-8, wherein determining the sending resource corresponding to the first information based on the configuration of the network device comprises:

   receiving fifth information sent by the network device, wherein the fifth information comprises a third index and a total number of TOs for sending the first information, the third index is an index corresponding to the first one of the TOs for sending the first information in a first time window; and
   determining the TOs for sending the first information from the first time window based on the fifth information.

10. The method of any of claims 2-9, wherein determining the sending resource corresponding to the first information based on the predefined protocol comprises at least one of:

    determining the first one of TOs in a first time window as the sending resource corresponding to the first information;

    determining the first and $\left\lfloor \frac{n}{2} \right\rfloor$-th ones of TOs in a first time window as the sending resource corresponding to the first information, where n is a total number of the TOs in the first time window, and $\lfloor . \rfloor$ is a round-down function;

    determining the first and $\left\lceil \frac{n}{2} \right\rceil$-th ones of TOs in a first time window as the sending resource corresponding to the first information, where n is a total number of the TOs in the first time window, and $\lceil . \rceil$ is a round-up function;

determining all TOs in a first time window as the sending resource corresponding to the first information;

determining first $\lfloor \frac{n}{2} \rfloor$ ones of TOs in a first time window as the sending resource corresponding to the first information, where n is a total number of the TOs in the first time window, and $\lfloor . \rfloor$ is a round-down function;

determining first $\frac{n}{2}$ ones of TOs in a first time window as the sending resource corresponding to the first information, where n is a total number of the TOs in the first time window; or

determining first $\lceil \frac{n}{2} \rceil$ ones of TOs in a first time window as the sending resource corresponding to the first information, where n is a total number of the TOs in the first time window, and $\lceil . \rceil$ is a round-up function.

11. The method of any of claims 2-9, wherein autonomously determining by default, by the terminal, the sending resource corresponding to the first information comprises at least one of:

determining the first one of TOs in a first time window as the sending resource corresponding to the first information;

determining the first and $\lfloor \frac{n}{2} \rfloor$-th ones of TOs in a first time window as the sending resource corresponding to the first information, where n is a total number of the TOs in the first time window, and $\lfloor . \rfloor$ is a round-down function;

determining the first and $\lceil \frac{n}{2} \rceil$-th ones of TOs in a first time window as the sending resource corresponding to the first information, where n is a total number of the TOs in the first time window, and $\lceil . \rceil$ is a round-up function;

determining all TOs in a first time window as the sending resource corresponding to the first information;

determining first $\lfloor \frac{n}{2} \rfloor$ ones of TOs in a first time window as the sending resource corresponding to the first information, where n is a total number of the TOs in the first time window, and $\lfloor . \rfloor$ is a

round-down function;

determining first $\frac{n}{2}$ ones of TOs in a first time window as the sending resource corresponding to the first information, where n is a total number of the TOs in the first time window; or

determining first $\lceil \frac{n}{2} \rceil$ ones of TOs in a first time window as the sending resource corresponding to the first information, where n is a total number of the TOs in the first time window, and $\lceil . \rceil$ is a round-up function.

12. The method of any of claims 3-11, wherein the first time window comprises:

one CG period; or
a plurality of CG periods that overlap in a time domain; or
a plurality of CG periods that do not overlap in a time domain; or
one or more TOs; or
one or more radio frames; or
one or more radio half-frames; or
one or more time domain symbols; or
one or more time slots.

13. A resource determination method, performed by a network device, comprising:
configuring a sending resource corresponding to first information for a terminal, wherein the first information indicates a usage state of the terminal for a transmission occasion (TO).

14. The method of claim 13, wherein the first information indicates the usage state of the terminal for one or more TOs in a first time window, and the first time window is a time window where all TOs whose usage states can be indicated by the first information are located.

15. The method of claim 13 or 14, wherein configuring the sending resource corresponding to the first information for the terminal comprises: sending one or more first indexes to the terminal, wherein the one or more first indexes correspond respectively to one or more TOs for sending the first information in a first time window.

16. The method of any of claims 13-15, wherein configuring the sending resource corresponding to the first information for the terminal comprises:
sending one or more second indexes to the terminal, wherein the one or more second indexes correspond respectively to one or more configured grant (CG) periods where TOs for sending the first information in a first time window are located.

**17.** The method of any of claims 13-16, wherein configuring the sending resource corresponding to the first information for the terminal comprises:
sending second information to the terminal, wherein the second information comprises a bitmap, each bit in the bitmap corresponds to one TO in a first time window, and a bit value carried by a bit in the bitmap indicates whether to use a TO corresponding to the bit to send the first information.

**18.** The method of any of claims 13-17, wherein configuring the sending resource corresponding to the first information for the terminal comprises:
sending third information to the terminal, wherein the third information is used to configure a total number of TOs for sending the first information.

**19.** The method of any of claims 13-18, wherein configuring the sending resource corresponding to the first information for the terminal comprises:
sending fourth information to the terminal, wherein the fourth information comprises a first offset and a total number of TOs for sending the first information.

**20.** The method of any of claims 13-19, wherein configuring the sending resource corresponding to the first information for the terminal comprises:
sending fifth information to the terminal, wherein the fifth information comprises a third index and a total number of TOs for sending the first information, the third index is an index corresponding to the first one of the TOs for sending the first information in a first time window.

**21.** The method of any of claims 13-20, wherein the first time window comprises:

one CG period; or
a plurality of CG periods that overlap in a time domain; or
a plurality of CG periods that do not overlap in a time domain; or
one or more TOs; or
one or more radio frames; or
one or more radio half-frames; or
one or more time domain symbols; or
one or more time slots.

**22.** A resource determination method, performed by a communication system, comprising:

configuring, by a network device, a sending resource corresponding to first information for a terminal, wherein the first information indicates a usage state of the terminal for a transmission occasion (TO); and
determining, by the terminal, the sending resource corresponding to the first information based on a configuration of the network device.

**23.** A first resource determination apparatus, comprising:

a determining module, configured to determine a sending resource corresponding to first information, wherein the first information indicates a usage state of the terminal for a transmission occasion (TO).

**24.** A second resource determination apparatus, comprising:

a sending module, configured to configure a sending resource corresponding to first information for a terminal, wherein the first information indicates a usage state of the terminal for a transmission occasion (TO).

**25.** A communication device, comprising:

one or more processors;
wherein the processor is configured to call instructions to cause the communication device to perform the resource determination method of any one of claims 1 to 12 or 13 to 21.

**26.** A communication system comprising: a terminal, and a network device; wherein the terminal is configured to perform the resource determination method of any one of claims 1 to 12, and the network device is configured to perform the resource determination method of any one of claims 13 to 21.

**27.** A storage medium for storing instructions, wherein when the instructions are executed on a communication device, the communication device is caused to perform the resource determination method of any one of claims 1 to 12 or 13 to 21.

Communication system 100

| Terminal 101 | Network device 102 |

**FIG. 1**

Terminal 101 — Network device 102

S2101: sending one or more first indexes

e.g. TO index

S2102: determining a sending resource corresponding to first information based on the one or more first indexes

S2103: using the sending resource corresponding to the first information to send the first information

S2104: based on the first information, scheduling the TO not used by the terminal to be reused

**FIG. 2a**

Terminal 101

Network device 102

S2201: sending one or more second indexes

e.g. index of a CG period

S2202: determining a sending resource corresponding to first information based on the one or more second indexes

S2203: using the sending resource corresponding to the first information to send the first information

S2204: based on the first information, scheduling the TO not used by the terminal to be reused

FIG. 2b

Terminal 101

Network device 102

S2301: sending second information

S2302: determining a sending resource corresponding to first information based on the second information

S2303: using the sending resource corresponding to the first information to send the first information

S2304: based on the first information, scheduling the TO not used by the terminal to be reused

FIG. 2c

Terminal 101

Network device 102

S2401: sending third information

S2402: determining a sending resource corresponding to first information based on the third information

S2403: using the sending resource corresponding to the first information to send the first information

S2404: based on the first information, scheduling the TO not used by the terminal to be reused

FIG. 2d

Terminal 101

Network device 102

S2501: sending fourth information

S2502: determining a sending resource corresponding to first information based on the fourth information

S2503: using the sending resource corresponding to the first information to send the first information

S2504: based on the first information, scheduling the TO not used by the terminal to be reused

FIG. 2e1

OFFSET=0

| reference TO/starting TO | | | | | |
|---|---|---|---|---|---|
| TO 0 | TO 1 | TO 2 | TO 3 | TO 4 | TO 5 |

first time window

FIG. 2e2

OFFSET=1

| reference TO | starting TO | | | | |
|---|---|---|---|---|---|
| TO 0 | TO 1 | TO 2 | TO 3 | TO 4 | TO 5 |

first time window

FIG. 2e3

Terminal 101

Network device 102

S2601: sending fifth information

S2602: determining a sending resource corresponding to first information based on the fifth information

S2603: using the sending resource corresponding to the first information to send the first information

S2604: based on the first information, scheduling the TO not used by the terminal to be reused

FIG. 2f1

| starting TO | | | | | |
|---|---|---|---|---|---|
| TO 0 | TO 1 | TO 2 | TO 3 | TO 4 | TO 5 |

first time window

FIG. 2f2

| | starting TO | | | | |
|---|---|---|---|---|---|
| TO 0 | TO 1 | TO 2 | TO 3 | TO 4 | TO 5 |

first time window

FIG. 2f3

Terminal 101

Network device 102

S2701: determining a sending resource corresponding to first information based on a predefined protocol

S2702: using the sending resource corresponding to the first information to send the first information

S2703: based on the first information, scheduling the TO not used by the terminal to be reused

FIG. 2g

```
        Terminal                                    Network
          101                                     device 102
```

S2801: autonomously determining a sending resource corresponding to first information by default

S2802: using the sending resource corresponding to the first information to send the first information

S2803: based on the first information, scheduling the TO not used by the terminal to be reused

**FIG. 2h**

receiving one or more first indexes — 3101

determining a sending resource corresponding to first information based on the one or more first indexes — 3102

using the sending resource corresponding to the first information to send the first information — 3103

**FIG. 3a**

receiving one or more second indexes — 3201

determining a sending resource corresponding to first information based on the one or more second indexes — 3202

using the sending resource corresponding to the first information to send the first information — 3203

**FIG. 3b**

```
┌─────────────────────────────────────────────────────────┐
│                                                         │ ─── 3301
│            receiving second information                 │
│                                                         │
└─────────────────────────────────────────────────────────┘
                            │
                            ▼
┌─────────────────────────────────────────────────────────┐
│                                                         │ ─── 3302
│  determining a sending resource corresponding to        │
│  first information based on the second information       │
│                                                         │
└─────────────────────────────────────────────────────────┘
                            │
                            ▼
┌─────────────────────────────────────────────────────────┐
│                                                         │ ─── 3303
│  using the sending resource corresponding to the first   │
│        information to send the first information         │
│                                                         │
└─────────────────────────────────────────────────────────┘
```

FIG. 3c

```
┌─────────────────────────────────────────────────────────┐
│                                                         │ ─── 3401
│            receiving third information                  │
│                                                         │
└─────────────────────────────────────────────────────────┘
                            │
                            ▼
┌─────────────────────────────────────────────────────────┐
│                                                         │ ─── 3402
│  determining a sending resource corresponding to        │
│  first information based on the third information        │
│                                                         │
└─────────────────────────────────────────────────────────┘
                            │
                            ▼
┌─────────────────────────────────────────────────────────┐
│                                                         │ ─── 3403
│  using the sending resource corresponding to the first   │
│        information to send the first information         │
│                                                         │
└─────────────────────────────────────────────────────────┘
```

FIG. 3d

```
┌─────────────────────────────────────────────────────────┐
│                                                         │ ─── 3501
│            receiving fourth information                 │
│                                                         │
└─────────────────────────────────────────────────────────┘
                            │
                            ▼
┌─────────────────────────────────────────────────────────┐
│                                                         │ ─── 3502
│  determining a sending resource corresponding to        │
│  first information based on the fourth information       │
│                                                         │
└─────────────────────────────────────────────────────────┘
                            │
                            ▼
┌─────────────────────────────────────────────────────────┐
│                                                         │ ─── 3503
│  using the sending resource corresponding to the first   │
│        information to send the first information         │
│                                                         │
└─────────────────────────────────────────────────────────┘
```

FIG. 3e

receiving fifth information ⎯ 3601

↓

determining a sending resource corresponding to first information based on the fifth information ⎯ 3602

↓

using the sending resource corresponding to the first information to send the first information ⎯ 3603

FIG. 3f

receiving a sending resource corresponding to first information ⎯ 3701

FIG. 3g

determining a sending resource corresponding to first information based on a predefined protocol ⎯ 3801

FIG. 3h

autonomously determining a sending resource corresponding to first information by default ⎯ 3901

↓

reporting the sending resource corresponding to the first information ⎯ 3902

FIG. 3i

determining a sending resource corresponding to first information ⎯ 31001

FIG. 3j

| sending one or more first indexes | 4101 |

↓

| receiving first information on a sending resource corresponding to the first information | 4102 |

↓

| based on the first information, scheduling an unused TO to be reused | 4103 |

FIG. 4a

| sending one or more second indexes | 4201 |

↓

| receiving first information on a sending resource corresponding to the first information | 4202 |

↓

| based on the first information, scheduling an unused TO to be reused | 4203 |

FIG. 4b

| sending second information | 4301 |

↓

| receiving first information on a sending resource corresponding to the first information | 4302 |

↓

| based on the first information, scheduling an unused TO to be reused | 4303 |

FIG. 4c

sending third information — 4401

↓

receiving first information on a sending resource corresponding to the first information — 4402

↓

based on the first information, scheduling an unused TO to be reused — 4403

FIG. 4d

sending fourth information — 4501

↓

receiving first information on a sending resource corresponding to the first information — 4502

↓

based on the first information, scheduling an unused TO to be reused — 4503

FIG. 4e

sending fifth information — 4601

↓

receiving first information on a sending resource corresponding to the first information — 4602

↓

based on the first information, scheduling an unused TO to be reused — 4603

FIG. 4f

determining a sending resource corresponding to first information based on a predefined protocol — 4701

↓

receiving first information on a sending resource corresponding to the first information — 4702

↓

based on the first information, scheduling an unused TO to be reused — 4703

FIG. 4g

receiving a sending resource corresponding to first information — 4801

↓

receiving first information on a sending resource corresponding to the first information — 4802

↓

based on the first information, scheduling an unused TO to be reused — 4803

FIG. 4h

configuring a sending resource corresponding to first information — 4701

FIG. 4i

Network device configures a sending resource corresponding to first information — 501

↓

terminal determines the sending resource corresponding to the first information based on configuration of the network device — 502

FIG. 5

first resource determination apparatus

determining module

FIG. 6a

second resource determination apparatus

sending module

FIG. 6b

7100

7103

transceiver

7101

processor

7104

interface

7102

memory

FIG. 7a

7200

7201

processor

7202

interface

7203

memory

FIG. 7b

## INTERNATIONAL SEARCH REPORT

| International application No. |
|---|
| **PCT/CN2023/085790** |

| A. | CLASSIFICATION OF SUBJECT MATTER |
|---|---|

H04W72/0446(2023.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, ENTXT, DWPI, WPABS: 传输, 发送, 时机, 配置授权, 使用, 未使用, 状态, 资源, transmission, occasion, TO, CG, configured grant, unused, used, resource, statement

| C. | DOCUMENTS CONSIDERED TO BE RELEVANT |
|---|---|

| Category* | Citation of document, with indication, where appropriate, of the relevant passages | Relevant to claim No. |
|---|---|---|
| X | MEDIATEK INC. "Discussion on XR capacity enhancements" *3GPP TSG RAN WG1 #112, R1-2301605*, 03 March 2023 (2023-03-03), pages 1-6 | 1-27 |
| X | HUAWEI et al. "Discussion on CG enhancements for XR capacity" *3GPP TSG RAN WG1 Meeting #112, R1-2300123*, 03 March 2023 (2023-03-03), chapter 2 | 1-27 |
| X | ZTE et al. "Discussion on XR specific capacity enhancements" *3GPP TSG RAN WG1 meeting #112, R1-2300374*, 03 March 2023 (2023-03-03), chapter 2 | 1-27 |
| X | MEDIATEK INC. "Discussion on XR capacity enhancements" *3GPP TSG RAN WG1 #112, R1-2301780*, 03 March 2023 (2023-03-03), pages 1-6 | 1-27 |
| X | WO 2023044912 A1 (NEC CORP.) 30 March 2023 (2023-03-30) description, paragraphs [0070]-[0175], and figures 3a-12 | 1-27 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 November 2023** | **22 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/085790**

**C.    DOCUMENTS CONSIDERED TO BE RELEVANT**

| Category* | Citation of document, with indication, where appropriate, of the relevant passages | Relevant to claim No. |
|---|---|---|
| A | CN 115580931 A (HUAWEI TECHNOLOGIES CO., LTD.) 06 January 2023 (2023-01-06) entire document | 1-27 |
| A | WO 2022132024 A1 (TELEFONAKTIEBOLAGET LM ERICSSON (PUBL)) 23 June 2022 (2022-06-23) entire document | 1-27 |

Form PCT/ISA/210 (second sheet) (July 2022)

## INTERNATIONAL SEARCH REPORT
### Information on patent family members

| International application No. |
| --- |
| **PCT/CN2023/085790** |

| Patent document cited in search report | | | Publication date (day/month/year) | Patent family member(s) | | | Publication date (day/month/year) |
| --- | --- | --- | --- | --- | --- | --- | --- |
| WO | 2023044912 | A1 | 30 March 2023 | None | | | |
| CN | 115580931 | A | 06 January 2023 | WO | 2022267984 | A1 | 29 December 2022 |
| WO | 2022132024 | A1 | 23 June 2022 | EP | 4265037 | A1 | 25 October 2023 |
| | | | | CN | 116965133 | A | 27 October 2023 |

Form PCT/ISA/210 (patent family annex) (July 2022)